# EUROPEAN PATENT APPLICATION

(11) **EP 4 694 233 A1**
(43) Date of publication of application: **11.02.2026**
(21) Application number: 24819495.3
(22) Date of filing: 09.05.2024
(51) Int. Cl.: H04W 4/80, H04W 4/06, H04W 72/0446, H04M 1/72409, G06F 3/16, H04R 3/12

(54) **METHOD FOR PROVIDING PLURALITY OF AUDIO SERVICES AND ELECTRONIC DEVICE PERFORMING SAME**

(30) Priority: 05.06.2023 KR 20230072236; 02.08.2023 KR 20230100979
(71) Applicant: Samsung Electronics Co., Ltd., Suwon-si, Gyeonggi-do 16677 (KR)
(72) Inventor: CHEONG, Gupil, Suwon-si Gyeonggi-do 16677 (KR); KANG, Doosuk, Suwon-si Gyeonggi-do 16677 (KR); YOO, Hyungseoung, Suwon-si Gyeonggi-do 16677 (KR); YOON, Heejae, Suwon-si Gyeonggi-do 16677 (KR); JIN, Juyeon, Suwon-si Gyeonggi-do 16677 (KR)
(74) Representative: HGF
(86) International application number: PCT/KR2024/006300
(87) International publication number: WO 2024/253343

(57) **Abstract**

A method for providing audio according to an embodiment may comprise the steps of: determining whether a second time resource for performing a second audio service can be configured to not overlap with a first time resource configured for a first audio service being performed by an electronic device; configuring the second time resource so that at least a portion of the first time resource and at least a portion of the second time resource overlap when it is determined that the first time resource and the second time resource cannot be configured to not overlap; and performing the second audio service on the basis of the second time resource.

## Description

### TECHNICAL FIELD

An embodiment relates to an electronic device for providing a plurality of audio services.

### BACKGROUND ART

Low-Energy (LE) audio is new audio technology that uses Bluetooth Low-Energy (BLE) technology. LE audio is intended to complement, rather than replace, existing Bluetooth Classic audio. Bluetooth Classic audio consumes high power and may have a limitation on the number of connectable devices. LE audio uses BLE and may transmit audio streaming between multiple devices quickly and reliably. LE audio may support a multi-stream function. Through the multi-stream function, one transmitting device may simultaneously transmit audio streams to multiple receiving devices. For example, one transmitting device may simultaneously transmit the same music to multiple receiving devices (e.g., Bluetooth earphones) using the multi-stream function of LE audio.

### DISCLOSURE OF THE INVENTION

### TECHNICAL SOLUTIONS

According to an embodiment, an electronic device includes a communication module configured to exchange data with an external device and at least one processor connected to the communication module, in which the at least one processor is configured to perform determining whether a second time resource to perform a second audio service is capable of being set so as not to overlap a first time resource that is set for a first audio service that is being performed by the electronic device, setting the second time resource so that at least a portion of the first time resource overlaps at least a portion of the second time resource when it is determined that the first time resource and the second time resource are not capable of being set so as not to overlap, and performing the second audio service based on the second time resource.

According to an embodiment, a method of performing an audio service, performed by an electronic device, includes determining whether a second time resource to perform a second audio service is capable of being set so as not to overlap a first time resource that is set for a first audio service that is being performed by the electronic device, setting the second time resource so that at least a portion of the first time resource overlaps at least a portion of the second time resource when it is determined that the first time resource and the second time resource are not capable of being set so as not to overlap, and performing the second audio service based on the second time resource.

According to an embodiment, an electronic device includes a communication module configured to exchange data with an external device and at least one processor connected to the communication module, in which the at least one processor is configured to perform determining whether a second time resource to perform a second audio service is capable of being set so as not to overlap a first time resource that is set for a first audio service that is being performed by the electronic device, adjusting at least one of a first quality of the first audio service or a second quality of the second audio service when it is determined that the first time resource and the second time resource are not capable of being set so as not to overlap, setting a third time resource and a fourth time resource so that the third time resource of the first audio service for the first quality does not overlap the fourth time resource of the second audio service for the second quality, and performing the second audio service based on the fourth time resource.

### BRIEF DESCRIPTION OF DRAWINGS

FIG. 1 is a block diagram illustrating an electronic device in a network environment, according to an embodiment.
FIG. 2 is a block diagram of an audio module according to an embodiment.
FIG. 3A is a flowchart of a method of providing a plurality of audio services, according to an embodiment.
FIG. 3B is a flowchart of a method of providing a plurality of audio services based on a first time resource of a first audio service and a second time resource of a second audio service, which are arranged such that at least a portion of the first time resource overlaps at least a portion of the second time resource, according to an embodiment.
FIG. 4 is a flowchart of a method of providing a first audio service based on a first time resource, according to an embodiment.
FIG. 5 is a flowchart of a method of determining a second time resource based on at least one parameter for a second audio service, according to an embodiment.
FIG. 6 illustrates a case in which at least a portion of a first time resource for a first audio service overlaps at least a portion of a second time resource for a second audio service, according to an embodiment.
FIG. 7A illustrates a method of setting a second time resource so that at least a portion of a first time resource for a first audio service overlaps at least a portion of the second time resource for a second audio service, according to an embodiment.
FIG. 7B illustrates data of a first audio service, which is set for a first time resource, and data of a second audio service, which is set for a second time resource, according to an embodiment.
FIG. 8 is a flowchart of a method of setting a second time resource based on a user input, according to an embodiment.
FIG. 9 is a flowchart of a method of performing a first target audio service in an overlapping time resource based on priorities of audio services, according to an embodiment.
FIG. 10 is a flowchart of a method of performing a second target audio service in an overlapping time resource based on the service quality of the second target audio service, according to an embodiment.
FIG. 11 is a flowchart of a method of performing a second target audio service in an overlapping time resource when a first data set of a first audio service is entirely received in a first sub-time resource, according to an embodiment.
FIG. 12 is a flowchart of a method of setting a third time resource to perform a third audio service while performing a first audio service and a second audio service, according to an embodiment.
FIG. 13 illustrates a system for simultaneously providing a first audio service for a connected isochronous stream (CIS) between an electronic device and a first external electronic device and a second audio service for a broadcast isochronous stream (BIS) of the electronic device, according to an embodiment.
FIG. 14 is a flowchart of a method of transmitting an audio broadcast stream as a second audio service, according to an embodiment.
FIG. 15 illustrates a system for simultaneously providing a first audio service for a CIS between an electronic device and a first external electronic device and a second audio service for a CIS between the electronic device and a second external electronic device, according to an embodiment.
FIG. 16 is a flowchart of a method of simultaneously providing a first audio service for a CIS between an electronic device and a first external electronic device and a second audio service for a CIS between the electronic device and a second external electronic device, according to an embodiment.
FIG. 17 illustrates a system for simultaneously providing a first audio service for a CIS between an electronic device and a first external electronic device and a second audio service for a BIS between the first external electronic device and a third external electronic device, according to an embodiment.
FIG. 18 is a flowchart of a method of receiving a request to perform a second audio service associated with a third external electronic device while performing a first audio service for a CIS between an electronic device and a first external electronic device, according to an embodiment.
FIG. 19 is a flowchart of a method of providing a plurality of audio services, according to an embodiment.
FIG. 20 is a flowchart of a method of setting a third time resource of a first audio service and a fourth time resource of a second audio service by adjusting a compression rate of data of an audio service, according to an embodiment.
FIG. 21 is a flowchart of a method of setting a third time resource of a first audio service and a fourth time resource of a second audio service by adjusting at least one parameter for an audio service, according to an embodiment.
FIG. 22 is a flowchart of a method of adjusting the quality of an audio service based on a user input, according to an embodiment.
FIG. 23 is a flowchart of a method of adjusting the quality of an audio service with a lower priority, according to an embodiment.
FIG. 24 is a flowchart of a method of providing a plurality of audio services based on a third time resource and a fourth time resource, which are set such that at least a portion of the third time resource of a first audio service for a first quality overlaps at least a portion of the fourth time resource of a second audio service for a second quality, according to an embodiment.
FIG. 25 illustrates data of a first audio service, which is set for a third time resource, and data of a second audio service, which is set for a fourth time resource, according to an embodiment of the method of providing the plurality of audio services described with reference to FIG. 22.

### BEST MODE FOR CARRYING OUT THE INVENTION

Hereinafter, various embodiments of the present disclosure will be described with reference to the accompanying drawings. However, this is not intended to limit the present disclosure to specific embodiments, and it should be understood that various modifications, equivalents, and/or alternatives of the embodiments of the present disclosure are included.

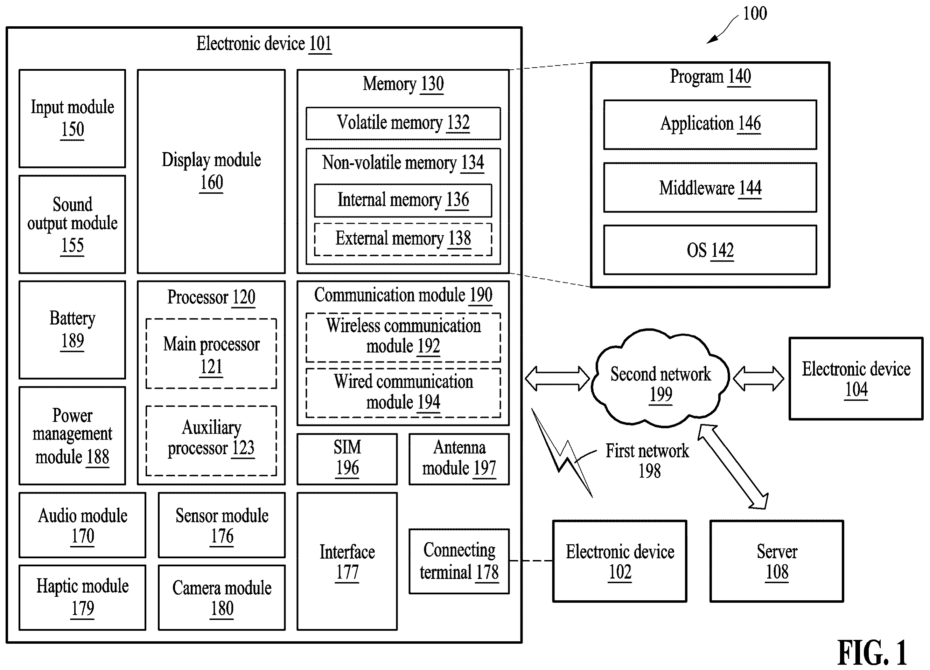

FIG. 1 is a block diagram illustrating an electronic device in a network environment, according to an embodiment.

FIG. 1 is a block diagram illustrating an electronic device 101 in a network environment 100 according to an embodiment. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added to the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive state (e.g., sleep), or together with the main processor 121 while the main processor 121 is in an active state (e.g., executing an application). According to an embodiment, the auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a related command. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside of the electronic device 101 (e.g., from a user). The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via an external electronic device (e.g., the electronic device 102) (e.g., a speaker or headphone) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, ISPs, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., the AP) and support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside the electronic device 101 (e.g., the external electronic device). According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a PCB, a RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-Things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one invoked instruction. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

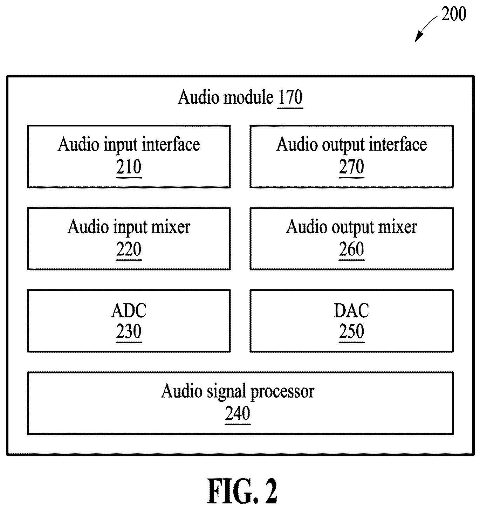

FIG. 2 is a block diagram of an audio module according to an embodiment.

Referring to FIG. 2, the audio module 170 described above with reference to FIG. 1 may include, for example, an audio input interface 210, an audio input mixer 220, an analog-to-digital converter (ADC) 230, an audio signal processor 240, a digital-to-analog converter (DAC) 250, an audio output mixer 260, or an audio output interface 270.

The audio input interface 210 may receive an audio signal corresponding to a sound obtained from outside the electronic device 101 via a microphone (e.g., a dynamic microphone, a condenser microphone, or a piezo microphone) that is configured as part of the input module 150 or separately from the electronic device 101. For example, if an audio signal is obtained from the external electronic device 102 (e.g., a headset or a microphone), the audio input interface 210 may be connected with the external electronic device 102 directly via the connecting terminal 178, or wirelessly (e.g., Bluetooth^{™} communication) via the wireless communication module 192 to receive the audio signal. According to an embodiment, the audio input interface 210 may receive a control signal (e.g., a volume adjustment signal that is received via an input button) related to the audio signal obtained from the external electronic device 102. The audio input interface 210 may include a plurality of audio input channels and may receive a different audio signal via a corresponding one of the plurality of audio input channels, respectively. According to an embodiment, additionally or alternatively, the audio input interface 210 may receive an audio signal from another component (e.g., the processor 120 or the memory 130 of FIG. 1) of the electronic device 101.

The audio input mixer 220 may synthesize a plurality of input audio signals into at least one audio signal. For example, according to an embodiment, the audio input mixer 220 may synthesize a plurality of analog audio signals that is input via the audio input interface 210 into at least one analog audio signal.

The ADC 230 may convert an analog audio signal into a digital audio signal. For example, according to an embodiment, the ADC 230 may convert an analog audio signal that is received via the audio input interface 210 or, additionally or alternatively, an analog audio signal that is synthesized via the audio input mixer 220 into a digital audio signal.

The audio signal processor 240 may perform various processing operations on a digital audio signal that is received via the ADC 230 or on a digital audio signal that is received from another component of the electronic device 101. For example, according to an embodiment, the audio signal processor 240 may change a sampling rate, apply one or more filters, perform interpolation processing, amplify or attenuate a whole or partial frequency bandwidth, perform noise processing (e.g., attenuating noise or echoes), change channels (e.g., switching between mono and stereo), mix signals, or extract a specified signal for one or more digital audio signals. According to an embodiment, one or more functions of the audio signal processor 240 may be implemented in the form of an equalizer.

The DAC 250 may convert a digital audio signal into an analog audio signal. For example, according to an embodiment, the DAC 250 may convert a digital audio signal processed by the audio signal processor 240 or a digital audio signal obtained from another component (e.g., the processor 120 or the memory 130) of the electronic device 101 into an analog audio signal.

The audio output mixer 260 may synthesize a plurality of audio signals, which is to be output, into at least one audio signal. For example, according to an embodiment, the audio output mixer 260 may synthesize an analog audio signal converted by the DAC 250 and another analog audio signal (e.g., an analog audio signal that is received via the audio input interface 210) into at least one analog audio signal.

The audio output interface 270 may output an analog audio signal that is converted by the DAC 250 or, additionally or alternatively, an analog audio signal that is synthesized by the audio output mixer 260 to the outside of the electronic device 101 via the sound output module 155. For example, the sound output module 155 may include a speaker, such as a dynamic driver or a balanced armature driver, or a receiver. According to an embodiment, the sound output module 155 may include a plurality of speakers. In such a case, the audio output interface 270 may output audio signals having a plurality of different channels (e.g., stereo channels or 5.1 channels) via at least some of the plurality of speakers. According to an embodiment, the audio output interface 270 may be connected with the external electronic device 102 (e.g., an external speaker or a headset) directly via the connecting terminal 178 or wirelessly via the wireless communication module 192 to output an audio signal.

According to an embodiment, the audio module 170 may generate, without separately including the audio input mixer 220 or the audio output mixer 260, at least one digital audio signal by synthesizing a plurality of digital audio signals using at least one function of the audio signal processor 240.

According to an embodiment, the audio module 170 may include an audio amplifier (not shown) (e.g., a speaker amplifying circuit) that is capable of amplifying an analog audio signal that is input via the audio input interface 210 or an audio signal that is to be output via the audio output interface 270. According to an embodiment, the audio amplifier may be configured as a module separate from the audio module 170.

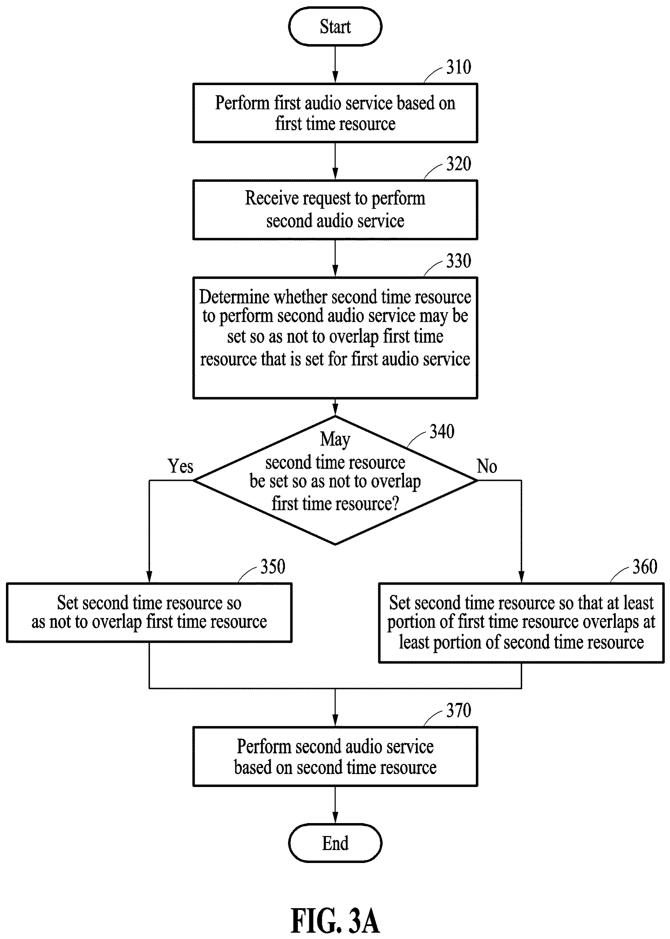

FIG. 3A is a flowchart of a method of providing a plurality of audio services, according to an embodiment.

Operations 310 to 370 may be performed by an electronic device (e.g., the electronic device 101 of FIG. 1). For example, the electronic device may include a processor (e.g., the processor 120 of FIG. 1), a communication module (e.g., the communication module 190 of FIG. 1), memory (e.g., the memory 130 of FIG. 1), and a display (e.g., the display module 160 of FIG. 1).

In operation 310, the processor of the electronic device may perform a first audio service based on a first time resource through the communication module. For example, the processor of the electronic device may transmit and receive data for providing the first audio service to and from a user of the electronic device in the first time resource that is set for the first audio service. The first audio service may be Low Energy (LE) audio service provided based on Bluetooth Low Energy (BLE). For example, the first audio service may be a broadcast isochronous stream (BIS) audio service. When the first audio service is a BIS audio service, the electronic device may operate in a source role or a sink role. For example, the first audio service may be a connected isochronous stream (CIS) audio service. When the first audio service is a CIS audio service, the CIS audio service may be performed based on a first communication link established between the electronic device and a first external electronic device (e.g., the electronic device 102 of FIG. 1). For example, the first communication link may be based on an asynchronous connectionless (ACL) link.

According to an embodiment, when the electronic device performs the first audio service, the electronic device may set (or allocate) the first time resource to the first audio service. For example, the time in which the communication module of the electronic device may transmit and receive data to and from external electronic devices may be referred to as a "time resource." For example, the LE audio service may be provided based on repeated anchor points. For example, the time from a k-th anchor point to a k+1-th anchor point may be tens of milliseconds or hundreds of milliseconds. Hereinafter, embodiments are described based on a time resource for a section between the k-th anchor point and the k+1-th point, but the embodiments may be equally applied to a section between other anchor points. For concise description, the entire time resource corresponding to one section may be expressed as 100%, and a portion (e.g., the first time resource) of the entire time resource may be expressed as a portion of 100%, but in the present disclosure, the time resources for sections between a plurality of anchor points may be defined as the entire time resource. For example, in the present disclosure, the entire time resource may refer to all future time resources or at least a portion of all time resources.

For example, when the first audio service is an audio service for a CIS, the time of a CIS event may be the first time resource. The time of the CIS event may be between Sub_Interval - T_MSS and (NSE × Sub_Interval) - T_MSS. Sub_Interval may be the time that is set for one sub-event capable of exchanging data between a master device and a slave device. NSE may be the number of sub-events. T_MSS may be the minimum time interval between the time corresponding to the end of the last bit of the last packet of an n-th sub-event and the time corresponding to the start of a first bit of a first packet of an n+1-th sub-event. For example, when ISO_Interval for the first audio service is 30 milliseconds (ms), the Sub_Interval is 3 ms, and the NSEs are 5, the occupancy rate of the first time resource with respect to the entire time resource may be ((3 ms × 5)/30 ms) × 100% = 50%.

For example, when the first audio service is an audio service for a broadcast isochronous stream (BIS), the time of a broadcast isochronous group (BIG) event may be the first time resource.

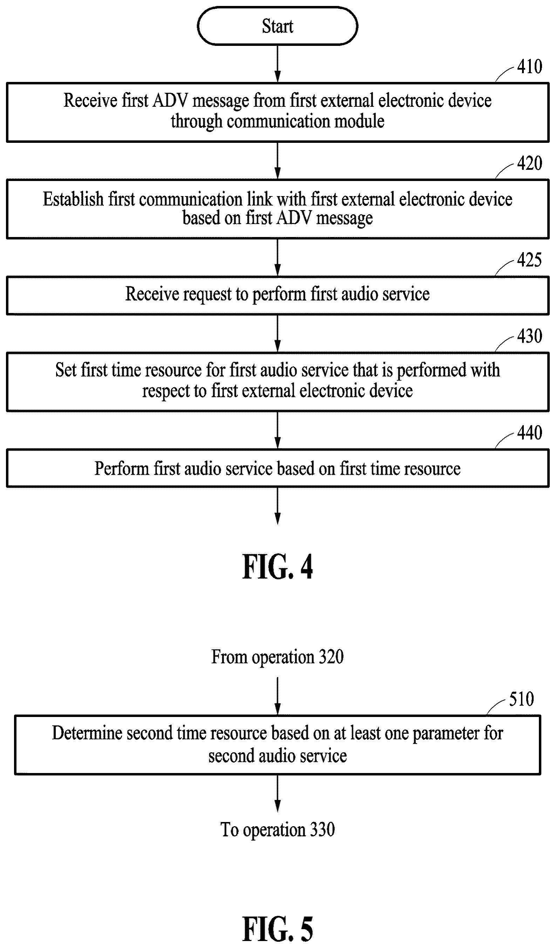

The first audio service is described in detail below with reference to FIGS. 4, 13, 15, and 17.

In operation 320, the processor of the electronic device may receive a request to perform a second audio service through the communication module. The request to perform the second audio service may include a service type of the second audio service. For example, the service type may be a CIS audio service type or a BIS audio service type.

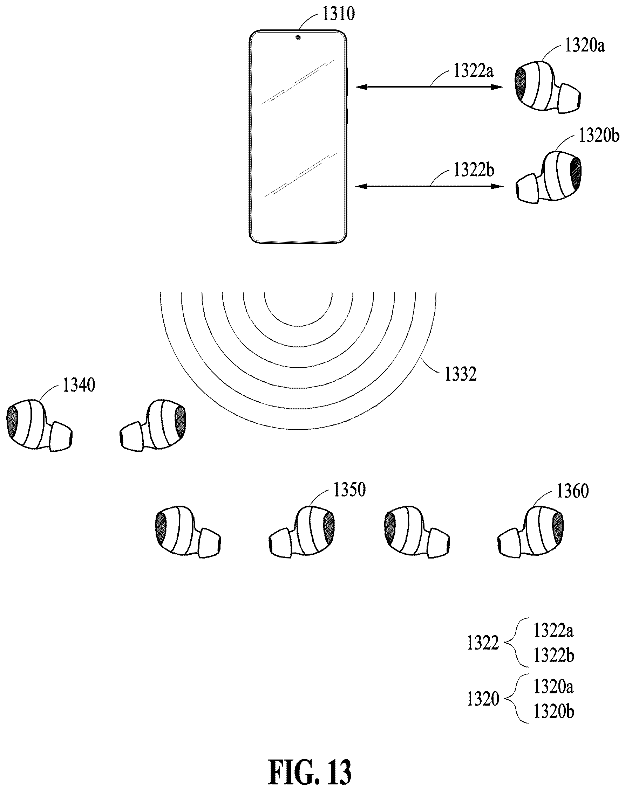

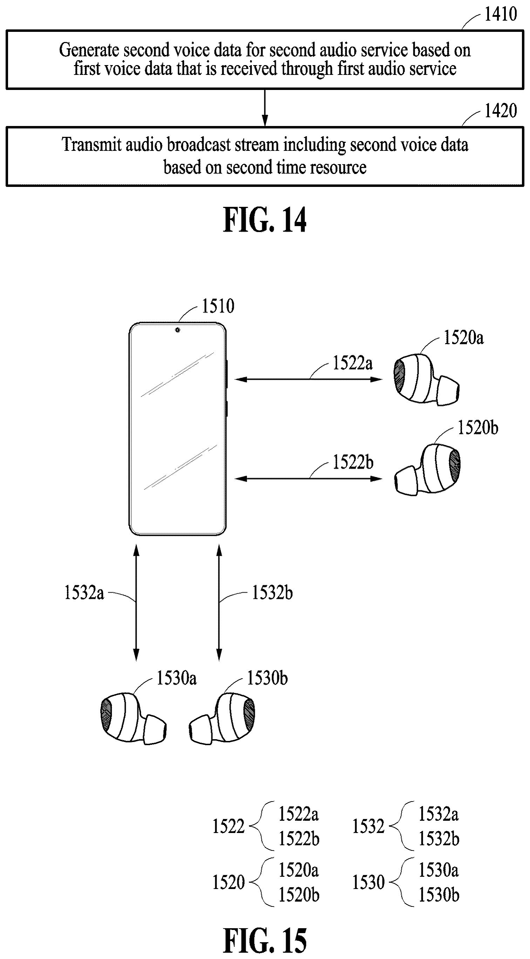

According to an embodiment, the electronic device may receive, from the user, a request to perform a BIS audio service that transmits (or broadcasts) an audio stream to the outside. In the BIS audio service, the electronic device may operate in a source role. For example, the audio stream may include voice data that is received from the first external electronic device through the first audio service (e.g., a CIS audio service or a BIS audio service). For example, an audio stream may include various types of data, in addition to the voice data. Hereinafter, the method of performing the BIS audio service as the second audio service is described in detail with reference to FIGS. 13 and 14.

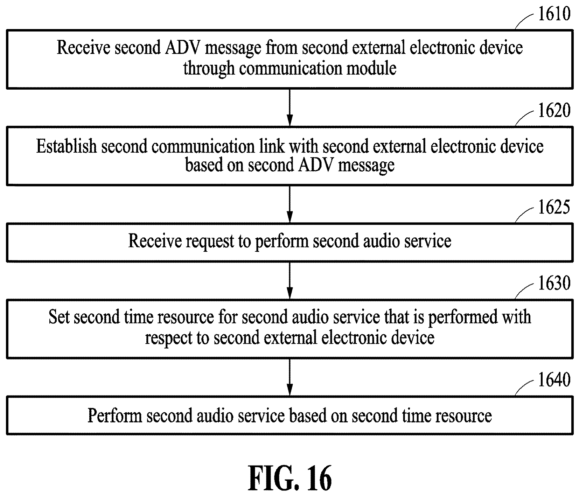

According to an embodiment, the electronic device may receive, from the user or from a second external electronic device (e.g., the electronic device 102 of FIG. 1), a request to perform a CIS audio service with respect to the second external electronic device. For example, while the electronic device performs the CIS audio service as the first audio service with respect to the first external electronic device, the electronic device may receive the request to perform the CIS audio service as the second audio service with respect to the second external electronic device. Hereinafter, the method of performing the CIS audio service as the second audio service is described in detail with reference to FIGS. 15 and 16.

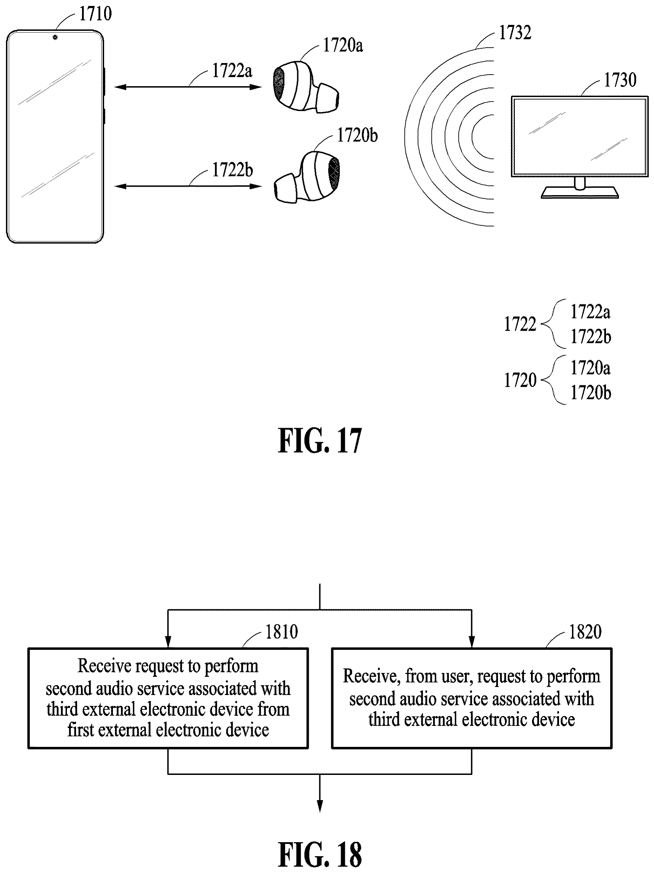

According to an embodiment, the electronic device may receive, from the user or from the first external electronic device, a BIS audio service request to receive an audio stream that is broadcast by the second external electronic device through the first external electronic device. For example, while the electronic device performs the CIS audio service as the first audio service with respect to the first external electronic device, the electronic device may receive, from the user or the first external electronic device, a BIS audio service request in which the first external electronic device requests to receive an audio stream that is broadcast by the second external electronic device. The BIS audio service may be an audio service in which the first external electronic device receives an audio stream that is broadcast by the second external electronic device. The electronic device may perform an assist role of controlling the first external electronic device so that the first external electronic device receives an audio stream that is broadcast by the second external electronic device in the second audio service. Hereinafter, the method of performing the BIS audio service with respect to the second external electronic device as the second audio service is described in detail with reference to FIGS. 17 and 18.

In operation 330, the processor of the electronic device may determine whether a second time resource for performing the second audio service may be set so as not to overlap the first time resource that is set for the first audio service.

According to an embodiment, the processor of the electronic device may determine (or calculate) the second time resource based on a value of at least one parameter for the second audio service. For example, when the second audio service is a CIS audio service, at least one CIS parameter may include the parameters ISO_Interval, Sub_Interval, SE_Length, Max_PDU, Max_SDU, MPT_{M}, MPT_{S}, NSE, BN, FT, and Framed. The parameters ISO_Interval, Sub_Interval, SE_Length, Max_PDU, Max_SDU, MPT_{M}, MPT_{S}, NSE, BN, FT, and Framed may be defined by a document indicating the standard of Bluetooth^{™}. For example, when the second audio service is a BIS audio service, at least one BIS parameter may include the parameters BIG_Handle, Advertising_Handle, Num_BIS, SDU_Interval, ISO_Interval, NSE, Max_PDU, Max_SDU, PHY, Packing, Framing, BN, IRC, PTO, Encryption, and Broadcast_Code. The parameters BIG_Handle, Advertising_Handle, Num_BIS, SDU_Interval, ISO_Interval, NSE, Max_PDU, Max_SDU, PHY, Packing, Framing, BN, IRC, PTO, Encryption, and Broadcast_Code may be defined by a document indicating the standard of Bluetooth^{™}.

According to an embodiment, when a time resource between consecutive anchor points for the first audio service is set to 100%, other time resources used for a periodic channel scan operation, a page scan operation, a BLE advertising operation, or an operation for Wi-Fi are set to 30%, and the first time resource that is set for the first audio service is set to 40%, it may be determined that the second time resource may be set so as not to overlap the first time resource when the second time resource that is determined with respect to the second audio service is less than or equal to 30%. In contrast, when the second time resource that is determined with respect to the second audio service exceeds 30%, it may be determined that the second time resource may not be set so as not to overlap the first time resource. The method of determining the second time resource is described in detail below with reference to FIG. 5.

In operation 340, the processor of the electronic device may perform operation 350 when it is determined that the second time resource may be set so as not to overlap the first time resource as a result of operation 330. The processor of the electronic device may perform operation 360 when it is determined that the second time resource may not be set so as not to overlap the first time resource as a result of operation 330.

In operation 350, the processor of the electronic device may set the second time resource so as not to overlap the first time resource. For example, the processor may set the second time resource so that the first time resource and the second time resource are arranged not to overlap. For example, the processor may set the second time resource such that the first time resource and the second time resource are arranged farthest from each other.

In operation 360, the processor of the electronic device may set the second time resource so that at least a portion of the first time resource overlaps at least a portion of the second time resource.

According to an embodiment, when the second audio service is a CIS audio service with the second external electronic device, the electronic device may transmit information about the second time resource to the second external electronic device. For example, the information about the CIS audio service may include information about at least one CIS parameter for the second audio service.

According to an embodiment, the second audio service may be a BIS audio service in which the electronic device broadcasts an audio stream. For example, information about the BIS audio service may include information about at least one BIS parameter for the second audio service. For example, the electronic device may generate an extended advertisements (EA) signal or a periodic advertising trains (PA) signal, which includes the information about the BIS audio service, and broadcast the EA signal or the PA signal. An external electronic device that receives the EA signal or the PA signal may receive the BIS or the audio stream that is broadcast by the electronic device based on the EA signal or the PA signal.

In operation 370, the processor of the electronic device may perform the second audio service based on the second time resource through the communication module.

According to an embodiment, when the second time resource is set so as not to overlap the first time resource, the processor of the electronic device may perform, through the communication module, the first audio service in the first time resource and perform the second audio service in the second time resource.

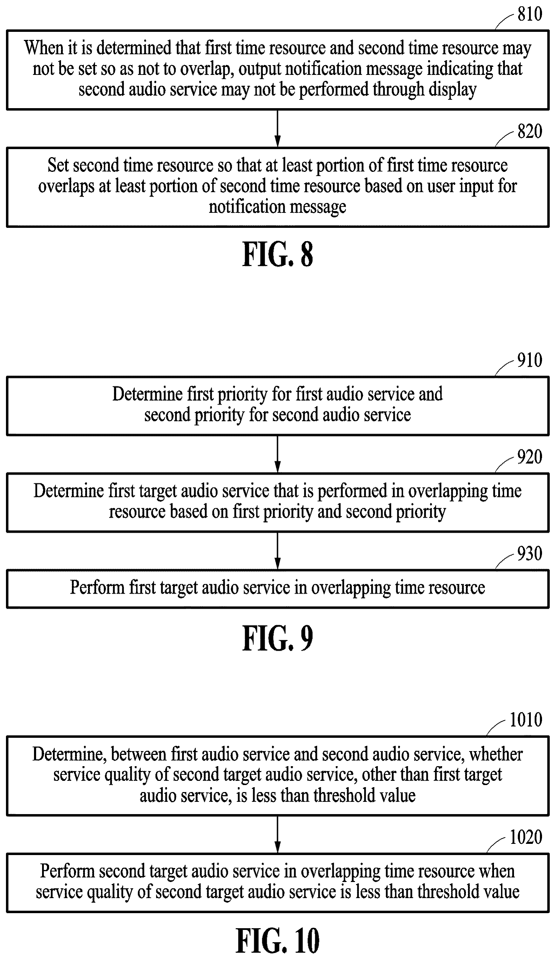

According to an embodiment, when the second time resource is set such that at least a portion of the first time resource overlaps at least a portion of the second time resource, the processor of the electronic device may selectively perform the first audio service or the second audio service in an overlapping time resource in which the first time resource overlaps the second time resource. Hereinafter, the method of selectively performing the first audio service or the second audio service in the overlapping time resource is described in detail with reference to FIGS. 9 to 11.

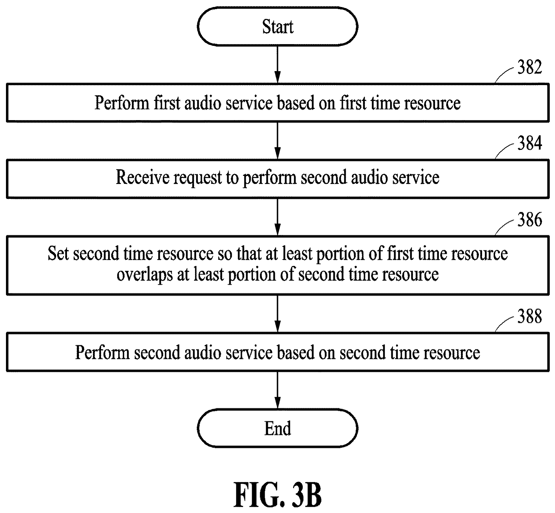

FIG. 3B is a flowchart of a method of providing a plurality of audio services based on a first time resource of a first audio service and a second time resource of a second audio service, which are arranged such that at least a portion of the first time resource overlaps at least a portion of the second time resource, according to an embodiment.

Operations 382 to 388 may be performed by an electronic device (e.g., the electronic device 101 of FIG. 1). For example, the electronic device may include a processor (e.g., the processor 120 of FIG. 1), a communication module (e.g., the communication module 190 of FIG. 1), memory (e.g., the memory 130 of FIG. 1), and a display (e.g., the display module 160 of FIG. 1).

In operation 382, the processor of the electronic device may perform the first audio service based on the first time resource through the communication module. The description of operation 382 may be replaced with the description of operation 310 described above with reference to FIG. 3A.

In operation 384, the processor of the electronic device may receive a request to perform the second audio service through the communication module. The description of operation 384 may be replaced with the description of operation 320 described above with reference to FIG. 3A.

In operation 386, the processor of the electronic device may set the second time resource so that at least a portion of the first time resource for the first audio service overlaps at least a portion of the second time resource for the second audio service. The description of operation 386 may be replaced with the description of operation 360 described above with reference to FIG. 3A.

In operation 388, the processor of the electronic device may perform the second audio service based on the second time resource through the communication module. The description of operation 388 may be replaced with the description of operation 370 described above with reference to FIG. 3A.

FIG. 4 is a flowchart of a method of providing a first audio service based on a first time resource, according to an embodiment.

According to an embodiment, operations 410 to 430 may be performed before operation 310 described above with reference to FIG. 3A is performed. Operations 410 to 430 may be performed by an electronic device (e.g., the electronic device 101 of FIG. 1). For example, the electronic device may include a processor (e.g., the processor 120 of FIG. 1), a communication module (e.g., the communication module 190 of FIG. 1), memory (e.g., the memory 130 of FIG. 1), and a display (e.g., the display module 160 of FIG. 1).

In operation 410, the processor of the electronic device may receive a first advertising (ADV) message from a first external electronic device (e.g., the electronic device 102 of FIG. 1) through the communication module.

According to an embodiment, the first external electronic device may include at least one of a left ear unit, a right ear unit, or a cradle device. For example, at least one of the left ear unit, the right ear unit, or the cradle device may broadcast the first ADV message. For example, the left ear unit and the right ear unit may each broadcast the first ADV message through BLE. For example, the first ADV message may include a universally unique identifier (UUID) of the first external electronic device.

According to an embodiment, when the electronic device receives the first ADV message from the first external electronic device, the electronic device may output, on the display, a pop-up message including information about the first external electronic device. The pop-up message may be a message requesting a user to confirm whether to establish a first communication link between the electronic device and the first external electronic device.

In operation 420, the processor of the electronic device may establish the first communication link or a first communication channel with the first external electronic device based on the first ADV message through the communication module. For example, when a command to establish the first communication link is received from the user, the electronic device may establish the first communication link with the first external electronic device based on the first ADV message. For example, when the information included in the first ADV message is information that is pre-registered in the electronic device, the electronic device may establish the first communication link with the first external electronic device. For example, a communication link may be established between the electronic device and the left ear unit, and a communication link may be established between the electronic device and the right ear unit. For example, the first communication link may be a CIS channel.

In operation 425, the processor of the electronic device may receive a request to perform the first audio service through the communication module. The request to perform the first audio service may include a service type of the first audio service. For example, the service type may be a CIS audio service type or a BIS audio service type.

In operation 430, the processor of the electronic device may set the first time resource for the first audio service that is performed with respect to the first external electronic device. For example, when the first audio service is an audio service for a CIS, the time of a CIS event in the entire time resource may be set to the first time resource. For example, the first time resource may be determined based on CIS parameters. For example, the first time resource may be determined based on the quality of a wireless environment for the first audio service.

According to an embodiment, the processor of the electronic device may determine the minimum time resource and the maximum time resource, which are required for the first audio service, and determine a value between the minimum time resource and the maximum time resource to be the first time resource.

According to an embodiment, operation 310 described above with reference to FIG. 3A may be performed after operation 430 is performed.

In operation 310, the processor of the electronic device may perform the first audio service based on the first time resource through the communication module. For example, when the first audio service is a CIS audio service, the electronic device may transmit data to the first external electronic device in the first time resource and may receive the data from the first external electronic device. For example, when the electronic device transmits voice data to the first external electronic device, the first external electronic device may output the voice data. For example, when the first external electronic device transmits, to the electronic device, the voice data that is obtained through a microphone of the first external electronic device, the electronic device may store the received voice data for an additional audio service (e.g., a second audio service).

According to an embodiment, operations 410 to 430 may be performed in the method of setting the first time resource, as the first audio service, with respect to the audio service for the CIS between the electronic device and the first external electronic device.

According to an embodiment, as the first audio service, the first time resource service of a BIS, in which the electronic device broadcasts an audio stream, may be set.

According to an embodiment, as the first audio service, the first time resource with respect to an audio service for a BIS in which the electronic device receives an audio stream that is broadcast by a second external electronic device may be set.

FIG. 5 is a flowchart of a method of determining a second time resource based on at least one parameter for a second audio service, according to an embodiment.

According to an embodiment, operation 510 described below may be performed after operation 320 described above with reference to FIG. 3A. Operation 510 may be performed by an electronic device (e.g., the electronic device 101 of FIG. 1). For example, the electronic device may include a processor (e.g., the processor 120 of FIG. 1), a communication module (e.g., the communication module 190 of FIG. 1), memory (e.g., the memory 130 of FIG. 1), and a display (e.g., the display module 160 of FIG. 1).

In operation 510, the processor of the electronic device may determine the second time resource based on at least one parameter for the second audio service. For example, the second time resource may be determined based on the quality of a wireless environment for the second audio service.

According to an embodiment, the processor of the electronic device may determine the minimum time resource and the maximum time resource, which are required for the second audio service, and determine a value between the minimum time resource and the maximum time resource to be the second time resource.

According to an embodiment, when the second audio service is a CIS audio service, the second time resource may be determined based on at least one CIS parameter.

According to an embodiment, when the second audio service is a BIS audio service, the second time resource may be determined based on at least one BIS parameter.

The parameter ISO_Interval for the second audio service may be different from the parameter ISO_Interval for a first audio service. For example, when the parameter ISO_Interval for the first audio service is 30 ms, the parameter ISO_Interval for the second audio service may be 60 ms.

Operation 330 described above with reference to FIG. 3A may be performed after operation 510 is performed.

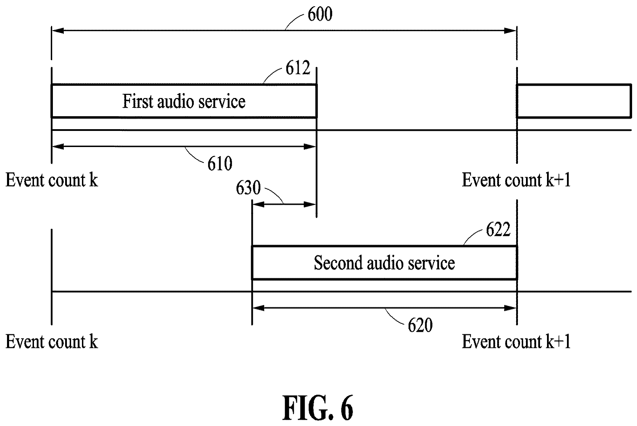

FIG. 6 illustrates a case in which at least a portion of a first time resource for a first audio service overlaps at least a portion of a second time resource for a second audio service, according to an embodiment.

According to an embodiment, a first time resource 610 may be set in an entire time resource 600 for the first audio service that is performed by an electronic device (e.g., the electronic device 101 of FIG. 1). The entire time resource 600 may be an interval between consecutive anchor points for the first audio service. Data 612 for the first audio service may be exchanged based on the first time resource 610. For concise description, in the embodiment, it may be assumed that the time resource between an event count k and an event count k+1 is the entire time resource 600, but in the present disclosure, the entire time resource may refer to all future time resources or at least a portion of all time resources. For example, the time resources across sections between a plurality of event counts may be defined as the entire time resource.

According to an embodiment, it may be determined that a second time resource 620 for the second audio service occupies 50% of the entire time resource 600. Data for the second audio service may be exchanged based on the second time resource 620. For example, when the first time resource 610 occupies 60% of the entire time resource 600, the sum of the first time resource 610 and the second time resource 620 may be 110%. Thus, regardless of how the second time resource 620 is arranged, at least a portion of the first time resource 610 may inevitably overlap at least a portion of the second time resource 620. The time resource in which at least a portion of the first time resource 610 overlaps at least a portion of the second time resource 620 may be referred to as an overlapping time resource 630 hereinafter. Although the above embodiment does not consider other time resources used for operations such as a periodic channel scanning, a page scanning, a BLE advertising, or Wi-Fi, which are performed by the electronic device, the electronic device may determine whether the second time resource 620 is arranged so as not to overlap at least a portion of other time resources that are preset for the entire time resource 600, in addition to not overlapping at least a portion of the first time resource 610. For descriptive convenience, the method of setting the second time resource 620 is described as considering only the first time resource 610, although other time resources are considered.

According to an embodiment, in operation 330 described above with reference to FIG. 3A, the processor of the electronic device may determine whether the overlapping time resource 630 occurs in an operation of setting the second time resource 620.

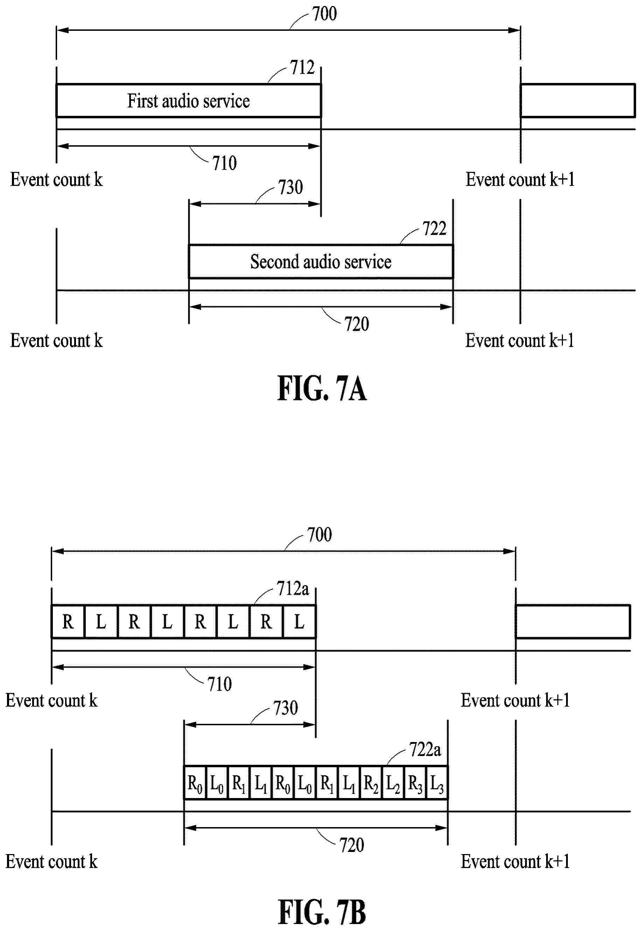

FIG. 7A illustrates a method of setting a second time resource so that at least a portion of a first time resource for a first audio service overlaps at least a portion of the second time resource for a second audio service, according to an embodiment.

According to an embodiment, when it is determined that a second time resource 720 (e.g., the second time resource 620 of FIG. 6) is not set so as not to overlap a first time resource 710 (e.g., the first time resource 610 of FIG. 6), an electronic device (e.g., the electronic device 101 of FIG. 1) may set the second time resource 720 so that at least a portion of the first time resource 710 overlaps at least a portion of the second time resource 720. For example, the electronic device may arrange the second time resource 720 such that an overlapping time resource 730 occurs in which at least a portion of the first time resource 710 overlaps at least a portion of the second time resource 720. Data 712 for the first audio service may be exchanged based on the first time resource 710. Data 722 for the second audio service may be exchanged based on the second time resource 720.

According to an embodiment, since an entire time resource 700 that may be used by a communication module (e.g., the communication module 190 of FIG. 1) of the electronic device is limited, actually, only one of the first audio service and the second audio service may be performed in the overlapping time resource 730. For example, the electronic device may schedule, among pieces of data transmitted for the first audio service, data with a relatively high importance or priority to be transmitted in the time resource other than the overlapping time resource 730 of the first time resource 710. For example, the electronic device may schedule, among pieces of data transmitted for the first audio service, data with a relatively low importance or priority to be transmitted in the overlapping time resource 730 of the first time resource 710.

Hereinafter, the method of selectively performing the first audio service or the second audio service in the overlapping time resource 730 is described in detail with reference to FIGS. 9 to 11.

FIG. 7B illustrates data of a first audio service, which is set for a first time resource, and data of a second audio service, which is set for a second time resource, according to an embodiment.

According to an embodiment, the first time resource 710 for the first audio service may be set in each of an electronic device (e.g., the electronic device 101 of FIG. 1) and a first external electronic device (e.g., the electronic device 102 of FIG. 1), and the second time resource 720 for the second audio service may be set in the electronic device.

According to an embodiment, when the first audio service is a CIS audio service, data 712a for the CIS audio service may be exchanged between the electronic device and the first external electronic device in the first time resource 710. For example, the data 712a for the CIS audio service may be audio source data that is transmitted by the electronic device to the first external electronic device. For example, the data 712a for the CIS audio service may be audio source data that is transmitted by the first external electronic device to the electronic device.

According to an embodiment, when the second audio service is a BIS audio service and the electronic device operates in a source role, data 722a for the BIS audio service may be broadcast by the electronic device in the second time resource 720.

For example, when it is determined that the first audio service is performed in the overlapping time resource 730, the electronic device may exchange the data 712a for the CIS audio service with the first external electronic device in the overlapping time resource 730. The electronic device may not broadcast the data 722a for the BIS audio service while exchanging the data 712a for the CIS audio service.

For example, when it is determined that the second audio service is performed in the overlapping time resource 730, the electronic device may broadcast the data 722a for the BIS audio service in the overlapping time resource 730. The electronic device may not exchange the data 712a for the CIS audio service while transmitting the data 722a for the BIS audio service.

FIG. 8 is a flowchart of a method of setting a second time resource based on a user input, according to an embodiment.

According to an embodiment, operations 810 and 820 described below may be performed by an electronic device (e.g., the electronic device 101 of FIG. 1). For example, the electronic device may include a processor (e.g., the processor 120 of FIG. 1), a communication module (e.g., the communication module 190 of FIG. 1), memory (e.g., the memory 130 of FIG. 1), and a display (e.g., the display module 160 of FIG. 1).

Operations 810 and 820 may be related to operation 360 described above with reference to FIG. 3A.

In operation 810, when it is determined that a first time resource (e.g., the first time resource 610 of FIG. 6) and a second time resource (e.g., the second time resource 620 of FIG. 6) are not set so as not to overlap, the processor of the electronic device may output a notification message, through the display, indicating that a second audio service is not normally provided. For example, the notification message may indicate that the second audio service is not performed. For example, the notification message may indicate that the performance of the second audio service may be degraded.

In operation 820, the processor of the electronic device may set the second time resource so that at least a portion of the first time resource overlaps at least a portion of the second time resource based on a user input for the notification message.

According to an embodiment, the electronic device may receive, from a user, the user input enabling at least a portion of the first time resource and at least a portion of the second time resource to overlap in response to the notification message. For example, the user input may include information indicating which audio service is more important between the first audio service and the second audio service.

FIG. 9 is a flowchart of a method of performing a first target audio service in an overlapping time resource based on priorities of audio services, according to an embodiment.

According to an embodiment, operations 910 to 930 described below may be performed by an electronic device (e.g., the electronic device 101 of FIG. 1). For example, the electronic device may include a processor (e.g., the processor 120 of FIG. 1), a communication module (e.g., the communication module 190 of FIG. 1), memory (e.g., the memory 130 of FIG. 1), and a display (e.g., the display module 160 of FIG. 1).

Operations 910 to 930 may be related to operation 370 described above with reference to FIG. 3A.

In operation 910, the processor of the electronic device may determine a first priority for a first audio service and a second priority for a second audio service.

According to an embodiment, an audio service (e.g., a BIS audio service) with a fixed transmission opportunity may have a higher priority than an audio service (e.g., a CIS audio service) with a repetitive transmission opportunity. For example, when the first audio service is a CIS audio service and the second audio service is a BIS audio service, the second priority of the second audio service may be higher than the first priority of the first audio service.

In operation 920, the processor of the electronic device may determine the first target audio service that is performed in an overlapping time resource (e.g., the overlapping time resource 730 of FIG. 7B) based on the first priority and the second priority. For example, when the first priority is higher than the second priority, the first audio service may be determined to be the first target audio service, and the second audio service may be determined to be the second target audio service. For example, when the second priority is higher than the first priority, the second audio service may be determined to be the first target audio service, and the first audio service may be determined to be the second target audio service.

According to an embodiment, data (e.g., the data 712a of FIG. 7B) to be exchanged in a first time resource (e.g., the first time resource 710 of FIG. 7B) may include one or more data packets. For example, the one or more data packets may include a first data packet and a second data packet having different priorities. For example, the first data packet may be a data packet that is exchanged in a first sub-time resource of the first time resource, which does not overlap a second time resource, and the second data packet may be a data packet that is exchanged in the overlapping time resource. For example, the first data packet may be a data packet that is exchanged in the present event (e.g., the event count k of FIG. 7B). For example, the second data packet may be a packet that is preliminarily exchanged in the present event. The priority of the first data packet may be higher than the priority of the second data packet.

According to an embodiment, data (e.g., the data 722a of FIG. 7B) to be exchanged in a second time resource (e.g., the second time resource 720 of FIG. 7B) may include one or more data packets. For example, the one or more data packets may include a third data packet and a fourth data packet having different priorities. For example, the third data packet may be a data packet that is exchanged in the overlapping time resource, and the fourth data packet may be a data packet that is exchanged in a second sub-time resource of the second time resource, which does not overlap the first time resource. For example, the third data packet may be a data packet that is exchanged in the present event. For example, the fourth data packet may be a packet that is preliminarily exchanged in the present event. The priority of the third data packet may be higher than the priority of the fourth data packet.

According to an embodiment, the processor of the electronic device may compare the priority of the second data packet of the first audio service with the priority of the third data packet of the second audio service, which are scheduled to be exchanged in the overlapping time resource, and determine an audio service for a data packet with a higher priority to be the first target audio service.

In operation 930, the processor of the electronic device may perform the first target audio service in the overlapping time resource. For example, when the first audio service is determined to be the first target audio service, the electronic device may exchange data of the first audio service with a first external electronic device in the overlapping time resource. For example, when the second audio service is determined to be the first target audio service, the electronic device may exchange or broadcast data of the second audio service with a second external electronic device in the overlapping time resource.

FIG. 10 is a flowchart of a method of performing a second target audio service in an overlapping time resource based on the service quality of the second target audio service, according to an embodiment.

According to an embodiment, operations 1010 and 1020 described below may be performed by an electronic device (e.g., the electronic device 101 of FIG. 1). For example, the electronic device may include a processor (e.g., the processor 120 of FIG. 1), a communication module (e.g., the communication module 190 of FIG. 1), memory (e.g., the memory 130 of FIG. 1), and a display (e.g., the display module 160 of FIG. 1).

Operations 1010 and 1020 may be related to operation 370 described above with reference to FIG. 3A.

In operation 1010, the processor of the electronic device may determine, between a first audio service and a second audio service, whether the service quality of the second target audio service, other than a first target audio service, is less than a threshold value.

According to an embodiment, when the first target audio service (e.g., the second audio service) is performed in a previous overlapping time resource (e.g., the overlapping time resource 730 of FIG. 7A) with respect to one or more past events, the performance time of the second target audio service (e.g., the first audio service) may be reduced. As the performance time of the second target audio service decreases, the service quality of the second target audio service may be lowered. For example, the service quality may be a data transmission/reception rate and is not limited to the described embodiments. For example, when the second target audio service is a CIS audio service, the service quality of the CIS audio service may be determined based on at least one of a packet error rate (PER), a bit error rate (BER), an acknowledgment (ACK) reception rate, or the possibility of occurrence of audio chopping. The electronic device may determine the service quality of the second target audio service with respect to one or more past events and determine whether the determined service quality of the second target audio service is less than a preset threshold value.

In operation 1020, the processor of the electronic device may perform the second target audio service in the overlapping time resource when the service quality of the second target audio service is less than the threshold value. For example, the electronic device may perform the second target audio service in the overlapping time resource with respect to the present event to improve the service quality of the second target audio service.

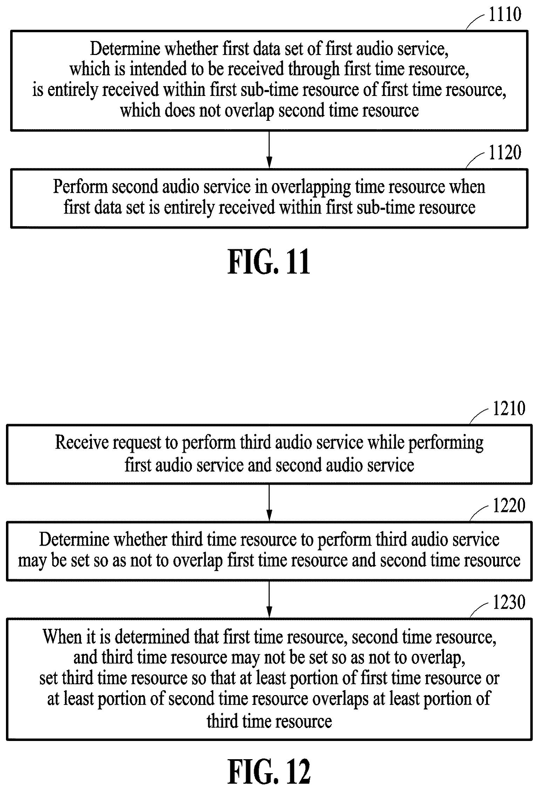

FIG. 11 is a flowchart of a method of performing a second target audio service in an overlapping time resource when a first data set of a first audio service is entirely received in a first sub-time resource, according to an embodiment.

According to an embodiment, operations 1110 and 1120 described below may be performed by an electronic device (e.g., the electronic device 101 of FIG. 1). For example, the electronic device may include a processor (e.g., the processor 120 of FIG. 1), a communication module (e.g., the communication module 190 of FIG. 1), memory (e.g., the memory 130 of FIG. 1), and a display (e.g., the display module 160 of FIG. 1).

Operations 1110 and 1120 may be related to operation 370 described above with reference to FIG. 3A.

In operation 1110, the processor of the electronic device may determine whether the first data set of the first audio service, which is to be received through the first time resource, is entirely received in the first sub-time resource of the first time resource (e.g., the first time resource 710 of FIG. 7A), which does not overlap the second time resource. For example, the first data set may include different data packets to be exchanged in the present event. Some of the entire data packet that is exchanged in the first time resource may be data packets including the same information. For example, the entire data packet may include a first data packet including first information, a second data packet including second information, a third data packet including the first information, and a fourth data packet including the second information. The third data packet and the fourth data packet may be preliminary data packets when the first data packet and the second data packet are not normally exchanged. For example, when the quality of a wireless environment is poor, the number of preliminary data packets may increase.

According to an embodiment, the first data packet and the second data packet may be set to be exchanged in the first sub-time resource, and the third data packet and the fourth data packet may be set to be exchanged in the overlapping time resource. For example, when the electronic device normally receives both the first data packet and the second data packet in the first sub-time resource, the electronic device may not need to receive the third data packet including the same information as the first data packet and the fourth data packet including the same information as the second data packet in the overlapping time resource. For example, when the electronic device normally receives the first data packet in the first sub-time resource but does not normally receive the second data packet, the electronic device may need to receive the fourth data packet including the same information as the second data packet in the overlapping time resource.

In operation 1120, the processor of the electronic device may perform a second audio service in the overlapping time resource when the first data set is entirely received in the first sub-time resource.

According to an embodiment, the processor of the electronic device may perform the first audio service in the overlapping time resource when the first data set is not entirely received in the first sub-time resource.

FIG. 12 is a flowchart of a method of setting a third time resource to perform a third audio service while performing a first audio service and a second audio service, according to an embodiment.

According to an embodiment, operations 1210 to 1230 described below may be performed by an electronic device (e.g., the electronic device 101 of FIG. 1). For example, the electronic device may include a processor (e.g., the processor 120 of FIG. 1), a communication module (e.g., the communication module 190 of FIG. 1), memory (e.g., the memory 130 of FIG. 1), and a display (e.g., the display module 160 of FIG. 1).

Operations 1210 to 1230 may be performed after operation 370 described above with reference to FIG. 3A is performed.

In operation 1210, the processor of the electronic device may receive a request to perform the third audio service while performing the first audio service and the second audio service. For example, the third audio service may be an LE audio service. For example, the third audio service may be a CIS audio service or a BIS audio service.

In operation 1220, the processor of the electronic device may determine whether the third time resource to perform the third audio service may be set so as not to overlap a first time resource and a second time resource.

The description of operation 1220 may be replaced with the description of operation 330 described above with reference to FIG. 3A. For example, when the third time resource is determined to be 10%, the sum of the first time resource and the second time resource including an overlapping time resource is 60%, and other time resources are 30%, it may be determined that the third time resource is set so as not to overlap the first time resource and the second time resource. For example, when the third time resource is determined to be 30%, the sum of the first time resource and the second time resource including the overlapping time resource is 60%, and other time resources are 30%, it may be determined that the third time resource is not set so as not to overlap the first time resource and the second time resource.

According to an embodiment, when it is determined that the third time resource is not set so as not to overlap the first time resource and the second time resource, the processor of the electronic device may output, through the display, a notification message indicating that the third audio service is not performed.

For example, the electronic device may receive, from a user, a user input enabling at least a portion of the first time resource or at least a portion of the second time resource and at least a portion of the third time resource to overlap in response to the notification message. For example, the user input may include information indicating which audio service is more important among the first audio service, the second audio service, and the third audio service.

For example, the electronic device may receive, from the user, a user input to terminate the first audio service or the second audio service in order to perform the third audio service in response to the notification message. The electronic device may ensure a remaining time resource for the third time resource by terminating a corresponding audio service based on the received user input.

In operation 1230, when it is determined that the first time resource, the second time resource, and the third time resource are not set so as not to overlap, the processor of the electronic device may set the third time resource so that at least a portion of the first time resource or at least a portion of the second time resource overlaps at least a portion of the third time resource. The description of operation 1230 may be replaced with the description of operation 360 described above with reference to FIG. 3A.

When the third time resource is set such that at least a portion of the first time resource, at least a portion of the second time resource, and/or at least a portion of the third time resource overlap, the electronic device may determine which audio service to perform in the overlapping time resource. For example, when a portion of the first time resource and a portion of the third time resource share a first overlapping time resource, an audio service that is performed in the first overlapping time resource may be determined based on the priority of the first audio service and the priority of the third audio service. For example, when a portion of the second time resource and a portion of the third time resource share a second overlapping time resource, an audio service that is performed in the second overlapping time resource may be determined based on the priority of the second audio service and the priority of the third audio service. For example, when a portion of the first time resource and a portion of the second time resource share a third overlapping time resource, an audio service that is performed in the third overlapping time resource may be determined based on the priority of the first audio service and the priority of the second audio service. For example, when a portion of the first time resource, a portion of the second time resource, and a portion of the third time resource share a fourth overlapping time resource, an audio service that is performed in the fourth overlapping time resource may be determined based on the priority of the first audio service, the priority of the second audio service, and the priority of the third audio service.

FIG. 13 illustrates a system for simultaneously providing a first audio service for a CIS between an electronic device and a first external electronic device and a second audio service for a BIS of the electronic device, according to an embodiment.

According to an embodiment, the system may include an electronic device 1310 (e.g., the electronic device 101 of FIG. 1) and a first external electronic device 1320 (e.g., the electronic device 102 of FIG. 1). The electronic device 1310 may perform the first audio service for the first external electronic device 1320. The first audio service may be a CIS audio service. The electronic device 1310 may perform the second audio service that broadcasts a BIS 1332. In the second audio service, the electronic device 1310 may operate in a source role. External electronic devices 1340, 1350, and 1360 that receive the BIS 1332 that is broadcast by the electronic device 1310 may output audio based on the BIS 1332. The external electronic devices 1340, 1350, and 1360 that receive the BIS 1332 may each operate in a sink role.

According to an embodiment, the first external electronic device 1320 may receive a voice uttered by a user using a microphone and generate voice data for the first audio service based on the received voice. For example, the voice data may be multi-channel data (e.g., a first channel for the left ear and a second channel for the right ear) for stereo sound. The electronic device 1310 may receive the voice data from the first external electronic device 1320 through a first communication link 1322 using a first time resource for the first audio service. For example, when the first external electronic device 1320 includes a left ear unit 1320a and a right ear unit 1320b, a first communication link 1322a may be established between the electronic device 1310 and the left ear unit 1320a, and a first communication link 1322b may be established between the electronic device 1310 and the right ear unit 1320b.

According to an embodiment, the electronic device 1310 may generate the BIS 1332 based on the voice data received from the first external electronic device 1320. For example, the BIS 1332 may include the multi-channel data for stereo sound. The multi-channel data for stereo sound may be data of the first channel for the left ear and the second channel for the right ear, which are received by the electronic device 1310 from the first external electronic device 1320 through the first audio service. The electronic device 1310 may broadcast the BIS 1332 using a second time resource for the second audio service. The external electronic devices 1340, 1350, and 1360 that receive the BIS 1332 may each output an audio signal based on the data of the first channel through the left ear unit 1320a and output an audio signal based on the data of the second channel through the right ear unit 1320b.

According to an embodiment, the first time resource and the second time resource may be set such that at least a portion of the first time resource for the first audio service overlaps at least a portion of the second time resource for the second audio service. For example, when it is determined that the second audio service is performed in an overlapping time resource, the electronic device 1310 may broadcast the BIS 1332 in the overlapping time resource. The electronic device 1310 may not exchange (or receive) data for a CIS audio service with the first external electronic device 1320 while broadcasting the BIS 1332.

FIG. 14 is a flowchart of a method of transmitting an audio broadcast stream as a second audio service, according to an embodiment.

According to an embodiment, operations 1410 and 1420 described below may be performed by an electronic device (e.g., the electronic device 101 of FIG. 1 or the electronic device 1310 of FIG. 13). For example, the electronic device may include a processor (e.g., the processor 120 of FIG. 1), a communication module (e.g., the communication module 190 of FIG. 1), memory (e.g., the memory 130 of FIG. 1), and a display (e.g., the display module 160 of FIG. 1).

Operations 1410 and 1420 may be related to operation 370 described above with reference to FIG. 3A.

In operation 1410, the processor of the electronic device may generate second voice data for the second audio service based on first voice data that is received through a first audio service.

In operation 1420, the processor of the electronic device may transmit an audio broadcast stream (e.g., the BIS 1332 of FIG. 13) including the second voice data based on a second time resource that is set for the second audio service.

According to an embodiment, when it is determined that the first audio service is performed in an overlapping time resource, the electronic device may broadcast the audio broadcast stream using the second time resource, while excluding the overlapping time resource.

According to an embodiment, when it is determined that the second audio service is performed in the overlapping time resource, the electronic device may broadcast the audio stream using the second time resource, including the overlapping time resource.

FIG. 15 illustrates a system for simultaneously providing a first audio service for a CIS between an electronic device and a first external electronic device and a second audio service for a CIS between the electronic device and a second external electronic device, according to an embodiment.

According to an embodiment, the system may include an electronic device 1510 (e.g., the electronic device 101 of FIG. 1 or the electronic device 1310 of FIG. 13), a first external electronic device 1520 (e.g., the electronic device 102 of FIG. 1 or the first external electronic device 1320 of FIG. 13), and a second external electronic device 1530. The electronic device 1510 may perform the first audio service for the first external electronic device 1520 through a first communication link 1522. The first audio service may be a CIS audio service. For example, when the first external electronic device 1520 includes a left ear unit 1520a and a right ear unit 1520b, a first communication link 1522a may be established between the electronic device 1510 and the left ear unit 1520a, and a first communication link 1522b may be established between the electronic device 1510 and the right ear unit 1520b.

The electronic device 1510 may perform the second audio service for the second external electronic device 1530 through a second communication link 1532. The second audio service may be a CIS audio service. For example, when the second external electronic device 1530 includes a left ear unit 1530a and a right ear unit 1530b, a second communication link 1532a may be established between the electronic device 1510 and the left ear unit 1530a, and a second communication link 1532b may be established between the electronic device 1510 and the right ear unit 1530b.

According to an embodiment, instead of performing the BIS audio service as the second audio service in the embodiment of the system described above with reference to FIGS. 13 and 14, in the system described with reference to FIG. 15, the CIS audio service may be performed as the second audio service. The BIS audio service may have the advantage of being able to transmit an audio stream to any number of external electronic devices using a predetermined time resource. The CIS audio service may have the advantage of being able to accurately transmit voice data to a specific external electronic device. A service method (e.g., a CIS audio service or a BIS audio service) for the second audio service may be selected depending on the purpose of the second audio service.

According to an embodiment, the electronic device 1510 may transmit the same data (e.g., voice data or sound sources) to the first external electronic device 1520 and the second external electronic device 1530. Although the same data is transmitted to the first external electronic device 1520 and the second external electronic device 1530, a first time resource and a second time resource may be set differently due to differences in wireless environments between the first communication link 1522 and the second communication link 1532.

FIG. 16 is a flowchart of a method of simultaneously providing a first audio service for a CIS between an electronic device and a first external electronic device and a second audio service for a CIS between the electronic device and a second external electronic device, according to an embodiment.

According to an embodiment, operations 1610 to 1640 described below may be performed by an electronic device (e.g., the electronic device 101 of FIG. 1, the electronic device 1310 of FIG. 13, or the electronic device 1510 of FIG. 15). For example, the electronic device may include a processor (e.g., the processor 120 of FIG. 1), a communication module (e.g., the communication module 190 of FIG. 1), memory (e.g., the memory 130 of FIG. 1), and a display (e.g., the display module 160 of FIG. 1).

Operation 1610 may be related to operation 320 described above with reference to FIG. 3A.

In operation 1610, the processor of the electronic device may receive a second advertising (ADV) message from a second external electronic device (e.g., the second external electronic device 1530 of FIG. 15) through the communication module. For example, the second external electronic device may include at least one of a left ear unit, a right ear unit, or a cradle device. For example, at least one of the left ear unit, the right ear unit, or the cradle device may broadcast the second ADV message. For example, the left ear unit and the right ear unit may each broadcast the second ADV message through BLE. For example, the second ADV message may include a universally unique identifier (UUID) of the second external electronic device. The description of the method of receiving the second ADV message may be replaced with the description of operation 410 described above with reference to FIG. 4.

After operation 1610 is performed, a second time resource may be set such that at least a portion of a first time resource overlaps at least a portion of the second time resource. For example, operations 330 to 360 described above with reference to FIG. 3A may be performed.

Operations 1620 and 1630 may be related to operation 360 described above with reference to FIG. 3A.

In operation 1620, the processor of the electronic device may establish a second communication link with the second external electronic device based on the second ADV message through the communication module. For example, a communication link may be established between the electronic device and the left ear unit, and a communication link may be established between the electronic device and the right ear unit. For example, the second communication link may be a CIS channel. The description of the method of establishing the second communication link may be replaced with the description of operation 420 described above with reference to FIG. 4.

In operation 1625, the processor of the electronic device may receive a request to perform the second audio service through the communication module. The request to perform the second audio service may include a service type of the second audio service. For example, the service type may be a CIS audio service type or a BIS audio service type.

In operation 1630, the processor of the electronic device may set the second time resource for the second audio service that is performed with respect to the second external electronic device. For example, when the second audio service is an audio service for a CIS, the time of a CIS event in the entire time resource may be set to the second time resource. For example, the second time resource may be determined based on CIS parameters. For example, the second time resource may be determined based on the quality of a wireless environment for the second audio service.

The description of the method of setting the second time resource may be replaced with the description of operation 430 described above with reference to FIG. 4.

Operation 1640 may be related to operation 370 described above with reference to FIG. 3A.

In operation 1640, the processor of the electronic device may perform the second audio service based on the second time resource.

According to an embodiment, when it is determined that the first audio service is performed in an overlapping time resource, the electronic device may transmit data to the second external electronic device using the second time resource, excluding the overlapping time resource.

According to an embodiment, when it is determined that the second audio service is performed in the overlapping time resource, the electronic device may transmit data to the second external electronic device using the second time resource, including the overlapping time resource.

FIG. 17 illustrates a system for simultaneously providing a first audio service for a CIS between an electronic device and a first external electronic device and a second audio service for a BIS between the first external electronic device and a third external electronic device, according to an embodiment.

According to an embodiment, the system may include an electronic device 1710 (e.g., the electronic device 101 of FIG. 1, the electronic device 1310 of FIG. 13, or the electronic device 1510 of FIG. 15), a first external electronic device 1720 (e.g., the electronic device 102 of FIG. 1, the first external electronic device 1320 of FIG. 13, or the first external electronic device 1520 of FIG. 15), and a third external electronic device 1730. For example, the third external electronic device 1730 may broadcast a BIS. The third external electronic device 1730 may operate in a source role.

The electronic device 1710 may perform the first audio service for the first external electronic device 1720 through a first communication link 1722. The first audio service may be a CIS audio service. For example, when the first external electronic device 1720 includes a left ear unit 1720a and a right ear unit 1720b, a first communication link 1722a may be established between the electronic device 1710 and the left ear unit 1720a, and a first communication link 1722b may be established between the electronic device 1710 and the right ear unit 1720b. For example, the first communication links 1722a and 1722b may be CIS channels.

For example, the electronic device 1710 may receive, from the first external electronic device 1720, a request to perform the second audio service associated with the third external electronic device 1730. For example, the first external electronic device 1720 may receive an extended advertisements (EA) signal or a periodic advertising trains (PA) signal, which is broadcast by the third external electronic device 1730 through a scan, and based on the received EA signal or PA signal, may transmit, to the electronic device 1710, the request to perform the second audio service, which receives the BIS that is broadcast by the third external electronic device 1730.

For example, the electronic device 1710 may receive, from a user, the request to perform the second audio service associated with the third external electronic device 1730. For example, the electronic device 1710 may receive an EA signal or a PA signal, which is broadcast by the third external electronic device 1730 through a scan, and output information about the received EA signal or PA signal through a display. The electronic device 1710 may receive, from the user, an input to receive the BIS, which is broadcast by the third external electronic device 1730, using the first external electronic device 1720.

FIG. 18 is a flowchart of a method of receiving a request to perform a second audio service associated with a third external electronic device while performing a first audio service for a CIS between an electronic device and a first external electronic device, according to an embodiment.

According to an embodiment, operation 1810 or operation 1820 may be optionally performed after operation 310 described above with reference to FIG. 3A is performed. Operation 1810 or operation 1820 may be performed by an electronic device (e.g., the electronic device 101 of FIG. 1, the electronic device 1310 of FIG. 13, the electronic device 1510 of FIG. 15, or the electronic device 1710 of FIG. 17). For example, the electronic device may include a processor (e.g., the processor 120 of FIG. 1), a communication module (e.g., the communication module 190 of FIG. 1), memory (e.g., the memory 130 of FIG. 1), and a display (e.g., the display module 160 of FIG. 1).

Operations 1810 and 1820 may be related to operation 320 described above with reference to FIG. 3A.

In operation 1810, the processor of the electronic device may receive the request to perform the second audio service associated with a third external electronic device (e.g., the third external electronic device 1730 of FIG. 17) from a first external electronic device (e.g., the first external electronic device 1720 of FIG. 17) through the communication module. For example, the first external electronic device may receive an EA signal or a PA signal, which is broadcast by the third external electronic device through a scan, and based on the received EA signal or PA signal, may transmit, to the electronic device, the request to perform the second audio service, which receives a BIS that is broadcast by the third external electronic device.

In operation 1820, the processor of the electronic device may receive, from a user, the request to perform the second audio service associated with the third external electronic device. For example, the electronic device may receive an EA signal or PA signal, which is broadcast by the third external electronic device through a scan, and output information about the received EA signal or PA signal through the display. The electronic device may receive, from the user, an input to receive the BIS, which is broadcast by the third external electronic device, using the first external electronic device.

According to an embodiment, in operation 330 described above with reference to FIG. 3A, the electronic device may determine a second time resource based on a value of at least one parameter for the second audio service to be performed by the first external electronic device. The electronic device may determine whether the second time resource for the first external electronic device to perform the second audio service is set so as not to overlap a first time resource that is set for the first audio service, based on the entire time resource allocated for the first external electronic device.

According to an embodiment, when the second time resource is not set such that the first time resource does not overlap the second time resource based on the entire time resource for the first external electronic device, in operation 360 described above with reference to FIG. 3A, the electronic device may set the second time resource such that at least a portion of the first time resource overlaps at least a portion of the second time resource. For example, the electronic device may reset the first time resource for the first audio service by considering the second time resource that is used by the first external electronic device to receive the BIS from the third external electronic device. For example, the first time resource may be reset so as to overlap at least a portion of the second time resource. In this case, the entire time resource may be reset based on anchor points for events of the second audio service.

According to an embodiment, in operation 370 described above with reference to FIG. 3A, the electronic device may perform the first audio service with the first external electronic device based on the first time resource. The first external electronic device may perform the second audio service, which receives the BIS from the third external electronic device, based on the second time resource. For example, the electronic device may determine a first target audio service based on a first priority of the first audio service and a second priority of the second audio service and may instruct the first external electronic device to perform an operation of the first external electronic device in an overlapping time resource according to the first target audio service.

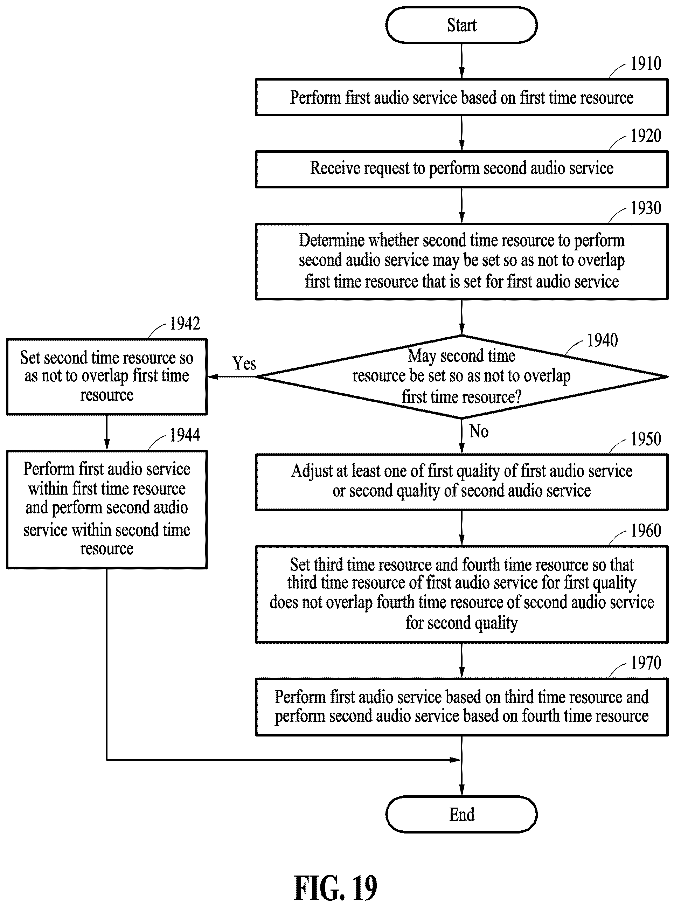

FIG. 19 is a flowchart of a method of providing a plurality of audio services, according to an embodiment.

Operations 1910 to 1970 described below may be performed by an electronic device (e.g., the electronic device 101 of FIG. 1, the electronic device 1310 of FIG. 13, the electronic device 1510 of FIG. 15, or the electronic device 1710 of FIG. 17). For example, the electronic device may include a processor (e.g., the processor 120 of FIG. 1), a communication module (e.g., the communication module 190 of FIG. 1), memory (e.g., the memory 130 of FIG. 1), and a display (e.g., the display module 160 of FIG. 1).

In operation 1910, the processor of the electronic device may perform a first audio service based on a first time resource through the communication module. The description of operation 1910 may be replaced with the description of operation 310 described above with reference to FIG. 3A.

In operation 1920, the processor of the electronic device may receive a request to perform a second audio service through the communication module. The description of operation 1920 may be replaced with the description of operation 320 described above with reference to FIG. 3A.

In operation 1930, the processor of the electronic device may determine whether a second time resource to perform the second audio service is set so as not to overlap the first time resource that is set for the first audio service. The description of operation 1930 may be replaced with the description of operation 330 described above with reference to FIG. 3A.

In operation 1940, the processor of the electronic device may perform operations 1942 and 1944 when it is determined that the second time resource is set so as not to overlap the first time resource as a result of operation 1930. The processor of the electronic device may perform operation 1950 when it is determined that the second time resource is not set so as not to overlap the first time resource as a result of operation 1930.

In operation 1942, the processor of the electronic device may set the second time resource so as not to overlap the first time resource. The description of operation 1942 may be replaced with the description of operation 350 described above with reference to FIG. 3A.

In operation 1944, the processor of the electronic device may perform the second audio service based on the second time resource through the communication module. When the second time resource is set so as not to overlap the first time resource, the processor of the electronic device may perform the first audio service in the first time resource and may perform the second audio service in the second time resource through the communication module.

In operation 1950, the processor of the electronic device may adjust at least one of a first quality of the first audio service or a second quality of the second audio service. For example, the quality of an audio service may be determined by the compression rate of data being transmitted, the number of transmission opportunities of data packets, or the format of an audio signal (e.g., a stereo format or a mono format). For the same information, an audio signal in the stereo format may include more pieces of data than an audio signal in the mono format. For example, between the first audio service and the second audio service, the quality of an audio service in which the electronic device operates in a source role may be adjusted.

The processor of the electronic device may adjust at least one of the first quality of the first audio service or the second quality of the second audio service to reduce the sum of the first time resource and the second time resource. For example, when the compression rate of data for the first audio service (or the second audio service) increases, the first time resource (or the second time resource) may be reduced. For example, when the number of transmission opportunities of data packets for the first audio service (or the second audio service) is reduced, the first time resource (or the second time resource) may be reduced. For example, when the format of an audio signal for the first audio service (or the second audio service) is changed from a stereo format to a mono format, the first time resource (or the second time resource) may be reduced.

According to an embodiment, when the time resource between consecutive anchor points for the first audio service is set to 100% and other time resources used for a periodic channel scan operation, a page scan operation, a BLE advertising operation, or an operation for Wi-Fi are set to 30%, at least one of the first quality of the first audio service or the second quality of the second audio service may be adjusted such that the sum of a third time resource of the first audio service for the first quality and a fourth time resource of the second audio service for the second quality is set to 70% or less.

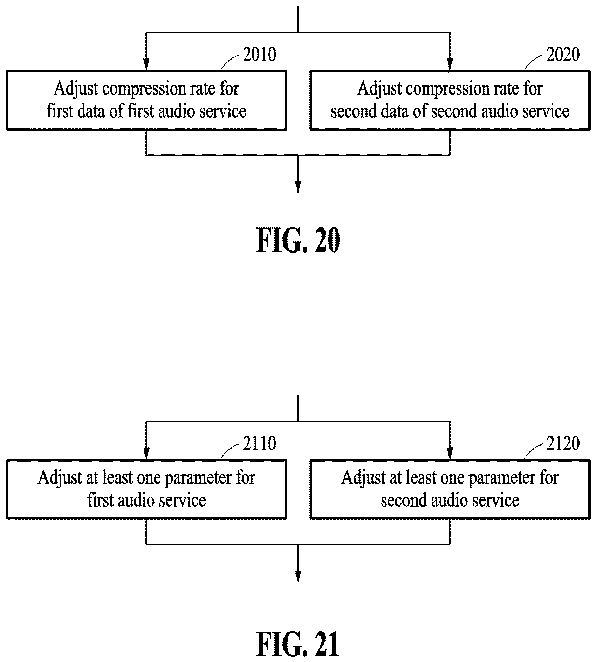

The method of adjusting at least one of the first quality of the first audio service or the second quality of the second audio service is described in detail below with reference to FIGS. 20 to 23.

In operation 1960, the processor of the electronic device may set the third time resource and the fourth time resource so that the third time resource of the first audio service for the first quality does not overlap the fourth time resource of the second audio service for the second quality.

In operation 1970, the processor of the electronic device may perform the first audio service based on the third time resource. The processor of the electronic device may perform the second audio service based on the fourth time resource.

FIG. 20 is a flowchart of a method of setting a third time resource of a first audio service and a fourth time resource of a second audio service by adjusting a compression rate of data of an audio service, according to an embodiment.

According to an embodiment, operations 2010 and 2020 described below may be performed by an electronic device (e.g., the electronic device 101 of FIG. 1, the electronic device 1310 of FIG. 13, the electronic device 1510 of FIG. 15, or the electronic device 1710 of FIG. 17). For example, the electronic device may include a processor (e.g., the processor 120 of FIG. 1), a communication module (e.g., the communication module 190 of FIG. 1), memory (e.g., the memory 130 of FIG. 1), and a display (e.g., the display module 160 of FIG. 1).

Operations 2010 and 2020 may be related to operation 1950 described above with reference to FIG. 19.

In operation 2010, the processor of the electronic device may adjust the compression rate of first data of the first audio service. For example, the electronic device may adjust the compression rate of the first data by changing a modulation and coding scheme (MCS) used to compress the first data. For example, the compression rate of the first data may be increased to reduce a first time resource. When the compression rate of the first data is increased, the amount of generated data may be reduced.

For example, the electronic device may set a third time resource of the first audio service based on a first quality of the first audio service, which is adjusted by increasing the compression rate of the first data of the first audio service. The third time resource may be a reduced time resource compared to the first time resource (e.g., the first time resource 710 of FIG. 7B) before the compression rate of the first data is increased. For example, the electronic device may not adjust the compression rate of second data of the second audio service. A fourth time resource of the second audio service may be set based on a second quality of the unadjusted second audio service. The fourth time resource that is set based on the second quality of the unadjusted second audio service may be identical to the second time resource of operation 1930 described above with reference to FIG. 19.

According to an embodiment, when the first audio service is a CIS audio service, data for the CIS audio service may be exchanged between the electronic device and a first external electronic device (e.g., the electronic device 102 of FIG. 1, the first external electronic device 1320 of FIG. 13, the first external electronic device 1520 of FIG. 15, or the first external electronic device 1720 of FIG. 17) in the third time resource.

In operation 2020, the processor of the electronic device may adjust the compression rate of the second data of the second audio service. For example, the compression rate of the second data may be increased to reduce a second time resource. When the compression rate of the second data is increased, the amount of data generated may be reduced.

According to an embodiment, when the second audio service is a BIS audio service and the electronic device operates in a source role, data for the BIS audio service may be broadcast by the electronic device in the fourth time resource.

According to an embodiment, when the compression rate of the second data of the second audio service is increased, the fourth time resource of the second audio service according to the increased compression rate may be reduced compared to the second time resource (e.g., the second time resource 720 of FIG. 7B) of the second audio service according to the unincreased compression rate.

FIG. 21 is a flowchart of a method of setting a third time resource of a first audio service and a fourth time resource of a second audio service by adjusting at least one parameter for an audio service, according to an embodiment.

According to an embodiment, operations 2110 and 2120 described below may be performed by an electronic device (e.g., the electronic device 101 of FIG. 1, the electronic device 1310 of FIG. 13, the electronic device 1510 of FIG. 15, or the electronic device 1710 of FIG. 17). For example, the electronic device may include a processor (e.g., the processor 120 of FIG. 1), a communication module (e.g., the communication module 190 of FIG. 1), memory (e.g., the memory 130 of FIG. 1), and a display (e.g., the display module 160 of FIG. 1).

Operations 2110 and 2120 may be related to operation 1950 described above with reference to FIG. 19.

In operation 2110, the processor of the electronic device may adjust at least one parameter for the first audio service. For example, at least one parameter for the first audio service may be a CIS parameter or a BIS parameter. For example, the CIS parameter or the BIS parameter to be adjusted may include at least one of the number of sub-events (NSEs), the number of BISs, a burst number (BN), or an immediate repetition count (IRC). The third time resource of the first audio service may be set based on at least one adjusted parameter for the first audio service.

According to an embodiment, the CIS parameter or the BIS parameter to be adjusted may be NSEs. When the NSEs are adjusted, at least one of the number of BISs, the BN, or the IRC may be adjusted together to correspond to the adjusted NSEs.

As the number of sub-events included in one event decreases when the NSEs decrease, the third time resource of the first audio service according to the adjusted parameter may be reduced compared to a first time resource (e.g., the first time resource 710 of FIG. 7B) of the first audio service according to the unadjusted parameter. The amount of data included in one event according to the adjusted NSEs may be reduced compared to the amount of data (e.g., the data 712a of FIG. 7B) according to the unadjusted NSEs.

According to an embodiment, the BIS parameter to be adjusted may be the number of BISs. When the number of BISs is adjusted, at least one of the NSEs, the BN, or the IRC may be adjusted together to correspond to the number of adjusted BISs.

Before the adjustment, the number of BISs may be 2. For example, the two BISs may include a first BIS (e.g., a left audio stream) and a second BIS (e.g., a right audio stream) for stereo sound. The first BIS and the second BIS may each be a mono channel. For example, after the adjustment, the number of adjusted BISs may be 1. For example, one BIS may include data for stereo channels for stereo sound.

As the number of sub-events included in one event decreases when the number of BISs decreases, the third time resource of the first audio service according to the adjusted parameter may be reduced compared to the first time resource (e.g., the first time resource 710 of FIG. 7B) of the first audio service according to the unadjusted parameter. The amount of data included in one event according to the number of adjusted BISs may be reduced compared to the amount of data (e.g., the data 712a of FIG. 7B) according to the number of unadjusted BISs.

In operation 2120, the processor of the electronic device may adjust at least one parameter for the second audio service. For example, at least one parameter for the second audio service may be a CIS parameter or a BIS parameter. For example, the CIS parameter or the BIS parameter to be adjusted may include at least one of the NSEs, the number of BISs (Num_BIS), a BN, or an IRC. The fourth time resource of the second audio service may be set based on at least one adjusted parameter for the second audio service.

According to an embodiment, when NSEs of the second audio service are reduced, the fourth time resource of the second audio service according to the reduced NSEs may be reduced compared to a second time resource (e.g., the second time resource 720 of FIG. 7B) of the second audio service according to the unreduced NSEs. The amount of data included in one event according to the reduced NSEs may be reduced compared to the amount of data according to the unreduced NSEs.

According to an embodiment, when the number of BISs of the second audio service is reduced, the fourth time resource of the second audio service according to the reduced number of BISs may be reduced compared to the second time resource (e.g., the second time resource 720 of FIG. 7B) of the second audio service according to the number of unreduced BISs. The amount of data included in one event according to the number of reduced BISs may be reduced compared to the amount of data according to the number of unreduced BISs.

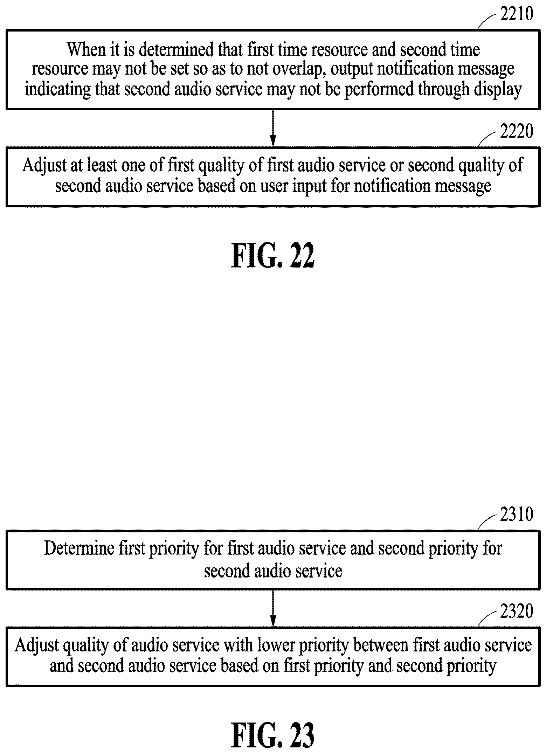

FIG. 22 is a flowchart of a method of adjusting the quality of an audio service based on a user input, according to an embodiment.

According to an embodiment, operations 2210 and 2220 described below may be performed by an electronic device (e.g., the electronic device 101 of FIG. 1, the electronic device 1310 of FIG. 13, the electronic device 1510 of FIG. 15, or the electronic device 1710 of FIG. 17). For example, the electronic device may include a processor (e.g., the processor 120 of FIG. 1), a communication module (e.g., the communication module 190 of FIG. 1), memory (e.g., the memory 130 of FIG. 1), and a display (e.g., the display module 160 of FIG. 1).

Operations 2210 and 2220 may be related to operation 1950 described above with reference to FIG. 19.

In operation 2210, when it is determined that a first time resource of a first audio service and a second time resource of a second audio service are not set such that they do not overlap each other, the processor of the electronic device may output a notification message indicating that the second audio service is not provided normally through the display. For example, the notification message may indicate that the second audio service is not performed. For example, the notification message may indicate that the performance of the second audio service may be degraded.

In operation 2220, the processor of the electronic device may adjust at least one of a first quality of the first audio service or a second quality of the second audio service based on a user input for the notification message.

According to an embodiment, the electronic device may receive, from a user, a user input that enables adjusting at least one of the first quality of the first audio service or the second quality of the second audio service in response to the notification message. For example, the user input may include information indicating which audio service is more important between the first audio service and the second audio service. For example, the user input may include information indicating which of the first audio service and the second audio service has its quality adjusted.

According to an embodiment, when the electronic device receives, from the user, a user input that enables adjusting at least one of the first quality of the first audio service or the second quality of the second audio service in response to the notification message, the electronic device may adjust at least one of the first quality of the first audio service or the second quality of the second audio service by considering the importance or priority of the first audio service and the second audio service.

FIG. 23 is a flowchart of a method of adjusting the quality of an audio service with a lower priority, according to an embodiment.

According to an embodiment, operations 2310 and 2320 described below may be performed by an electronic device (e.g., the electronic device 101 of FIG. 1, the electronic device 1310 of FIG. 13, the electronic device 1510 of FIG. 15, or the electronic device 1710 of FIG. 17). For example, the electronic device may include a processor (e.g., the processor 120 of FIG. 1), a communication module (e.g., the communication module 190 of FIG. 1), memory (e.g., the memory 130 of FIG. 1), and a display (e.g., the display module 160 of FIG. 1).

Operations 2310 and 2320 may be related to operation 1950 described above with reference to FIG. 19.

In operation 2310, the processor of the electronic device may determine a first priority for a first audio service and a second priority for a second audio service. The description of the priority of an audio service or the priority of data packets of the audio service may be replaced with the description of the priority in operation 920 described above with reference to FIG. 9.

In operation 2320, the processor of the electronic device may adjust the quality of the audio service with a lower priority between the first audio service and the second audio service based on the first priority and the second priority.

According to an embodiment, at least one of the first quality of the first audio service or the second quality of the second audio service may be adjusted based on the difference between the first priority and the second priority. For example, when the difference between the first priority and the second priority is large, the quality of an audio service with a higher priority may be slightly lowered, and the quality of an audio service with a lower priority may be significantly lowered. For example, when the difference between the first priority and the second priority is not large, the first quality of the first audio service and the second quality of the second audio service may be lowered to similar levels.

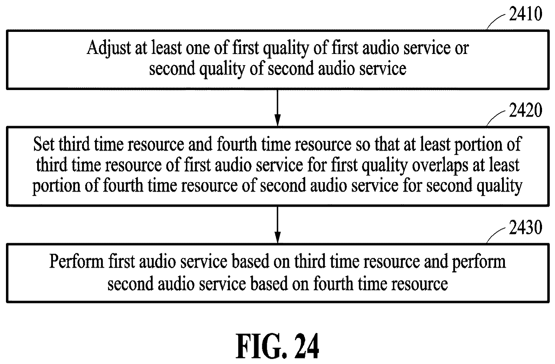

FIG. 24 is a flowchart of a method of providing a plurality of audio services based on a third time resource and a fourth time resource, which are set such that at least a portion of the third time resource of a first audio service for a first quality overlaps at least a portion of the fourth time resource of a second audio service for a second quality, according to an embodiment.

Referring to FIGS. 3 to 18, the method of setting the first time resource and the second time resource so that at least a portion of the first time resource of the first audio service overlaps at least a portion of the second time resource of the second audio service is described. Referring to FIGS. 19 to 23, the method of setting the third time resource and the fourth time resource so that the third time resource of the first audio service for the adjusted first quality does not overlap the fourth time resource of the second audio service for the adjusted second quality is described. According to an embodiment, the embodiment of the method described with reference to FIGS. 19 to 23 may be applied to the method described with reference to FIGS. 3 to 18. For example, the first time resource may be adjusted to the third time resource by lowering the first quality of the first audio service, and the third time resource may be set to overlap at least a portion of the second time resource of the second audio service. For example, the first time resource may be adjusted to the third time resource by lowering the first quality of the first audio service, the second time resource may be adjusted to the fourth time resource by lowering the second quality of the second audio service, and the third time resource may be set to overlap at least a portion of the fourth time resource of the second audio service. Hereinafter, the method of setting the third time resource and the fourth time resource so that at least a portion of the third time resource overlaps at least a portion of the fourth time resource is described in detail.

According to an embodiment, operations 2410 to 2430 described below may be performed by an electronic device (e.g., the electronic device 101 of FIG. 1, the electronic device 1310 of FIG. 13, the electronic device 1510 of FIG. 15, or the electronic device 1710 of FIG. 17). For example, the electronic device may include a processor (e.g., the processor 120 of FIG. 1), a communication module (e.g., the communication module 190 of FIG. 1), memory (e.g., the memory 130 of FIG. 1), and a display (e.g., the display module 160 of FIG. 1).

Operations 2410 and 2420 may be related to operation 360 described above with reference to FIG. 3A.

In operation 2410, the processor of the electronic device may adjust at least one of the first quality of the first audio service or the second quality of the second audio service. The description of operation 2410 may be replaced with the description of operation 1950 described above with reference to FIG. 19.

In operation 2420, the processor of the electronic device may set the third time resource and the fourth time resource so that at least a portion of the third time resource of the first audio service for the first quality overlaps at least a portion of the fourth time resource of the second audio service for the second quality. The description of operation 2420 may be replaced with the description of operation 360 described above with reference to FIG. 3A.

In operation 2430, the processor of the electronic device may perform the first audio service based on the third time resource and perform the second audio service based on the fourth time resource.

According to an embodiment, when the fourth time resource is set such that at least a portion of the third time resource overlaps at least a portion of the fourth time resource, the processor of the electronic device may selectively perform the first audio service or the second audio service in an overlapping time resource in which the third time resource overlaps the fourth time resource. The detailed description of the method of selectively performing the first audio service or second audio service in the overlapping time resource described above with reference to FIGS. 9 to 11 may be applied to the description of operation 2430.

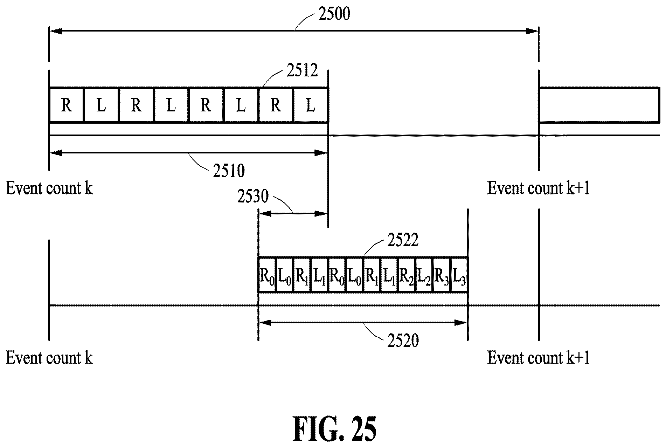

FIG. 25 illustrates data of a first audio service, which is set for a third time resource, and data of a second audio service, which is set for a fourth time resource, according to an embodiment of the method of providing the plurality of audio services described with reference to FIG. 22.

According to an embodiment, a first time resource (e.g., the first time resource 710 of FIG. 7B) for the first audio service and a second time resource (e.g., the second time resource 720 of FIG. 7B) for the second audio service may be determined in each of an electronic device (e.g., the electronic device 101 of FIG. 1, the electronic device 1310 of FIG. 13, the electronic device 1510 of FIG. 15, or the electronic device 1710 of FIG. 17) and a first external electronic device (e.g., the electronic device 102 of FIG. 1, the first external electronic device 1320 of FIG. 13, the first external electronic device 1520 of FIG. 15, or the first external electronic device 1720 of FIG. 17).

According to an embodiment, the electronic device may adjust at least one of a first quality of the first audio service or a second quality of the second audio service when the sum of the first time resource and the second time resource exceeds the entire available time resource. In the embodiment, the first quality of the first audio service may not be adjusted, and the second quality of the second audio service may be adjusted. For example, as the second quality, the compression rate of data for the second audio service may increase. Since the first quality is not adjusted, a third time resource 2810 of the first audio service may be the same as the first time resource. Since the second quality is adjusted, a fourth time resource 2520 of the second audio service may be reduced compared to the second time resource.

For example, when it is determined that the first audio service is performed in an overlapping time resource 2530, the electronic device may exchange data 2512 for the first audio service with the first external electronic device in the overlapping time resource 2530. The electronic device may not broadcast data 2522 for the second audio service while exchanging the data 2512 for the first audio service.

For example, when it is determined that the second audio service is performed in the overlapping time resource 2530, the electronic device may broadcast the data 2522 for the second audio service in the overlapping time resource 2530. The electronic device may not exchange the data 2512 for the first audio service while exchanging the data 2522 for the second audio service.

According to an embodiment, an electronic device (101; 1310; 1510; 1710) may include a communication module (190) configured to exchange data with an external device and at least one processor (120) connected to the communication module, in which the processor may perform operation (330) of determining whether a second time resource to perform a second audio service is capable of being set so as not to overlap a first time resource that is set for a first audio service that is being performed by the electronic device, operation (360) of setting the second time resource so that at least a portion of the first time resource overlaps at least a portion of the second time resource when it is determined that the first time resource and the second time resource are not capable of being set so as not to overlap, and operation (370) of performing the second audio service based on the second time resource.

According to an embodiment, the processor may further perform operation (410) of receiving a first advertising (ADV) message from a first external electronic device (102; 1320; 1520; 1720) through the communication module, operation (420) of establishing a first communication link with the first external electronic device based on the first ADV message, operation (430) of setting the first time resource for the first audio service that is performed with respect to the first external electronic device, and operation (440) of performing the first audio service based on the first time resource.

According to an embodiment, the operation (370) of performing the second audio service based on the second time resource may include operation (1410) of generating second voice data for the second audio service based on first voice data that is received through the first audio service and operation (1420) of transmitting an audio broadcast stream comprising the second voice data based on the second time resource.

According to an embodiment, the processor may further perform operation (1610) of receiving, from a second external electronic device (1530), a second ADV message for the second audio service through the communication module.

According to an embodiment, the operation (360) of setting the second time resource so that at least a portion of the first time resource overlaps at least a portion of the second time resource may include operation (1620) of establishing a second communication link with the second external electronic device based on the second ADV message and operation (1630) of setting the second time resource for the second audio service that is performed with respect to the second external electronic device based on at least one parameter for the second audio service.

According to an embodiment, the processor may further perform the operation (e.g., 1810) of receiving, from the first external electronic device, a request to perform the second audio service associated with a third external electronic device (e.g., 1730).

According to an embodiment, the processor may further perform the operation (e.g., 1820) of receiving, from a user, the request to perform the second audio service associated with the third external electronic device.

According to an embodiment, the processor may further perform the operation (e.g., 510) of determining the second time resource based on at least one parameter for the second audio service.

According to an embodiment, the at least one parameter for the second audio service may include a CIS parameter.

According to an embodiment, the at least one parameter for the second audio service may include a BIS parameter.

According to an embodiment, the operation (360) of setting the second time resource so that at least a portion of the first time resource overlaps at least a portion of the second time resource may include, operation (810) of outputting, through a display (160), a notification message indicating that the second audio service is not capable of being performed when it is determined that the first time resource and the second time resource are not capable of being set so as not to overlap and operation (820) of setting the second time resource so that the at least a portion of the first time resource overlaps the at least a portion of the second time resource based on a user input for the notification message.

According to an embodiment, the operation (370) of performing the second audio service based on the second time resource may include operation (910) of determining a first priority for the first audio service and a second priority for the second audio service, operation (920) of determining, between the first audio service and the second audio service, a first target audio service that is performed in an overlapping time resource in which the first time resource overlaps the second time resource, based on the first priority and the second priority, and operation (930) of performing the first target audio service in the overlapping time resource.

According to an embodiment, the operation (370) of performing the second audio service based on the second time resource may include operation (1010) of determining, between the first audio service and the second audio service, whether a service quality of a second target audio service, other than the first target audio service, is less than a threshold value and operation (1020) of performing the second target audio service in the overlapping time resource when the service quality of the second target audio service is less than the threshold value.

According to an embodiment, the operation (370) of performing the second audio service based on the second time resource may include operation (1110) of determining whether a first data set of the first audio service, which is to be received through the first time resource, is entirely received in a first sub-time resource of the first time resource, which does not overlap the second time resource and operation (1120) of performing the second target audio service in an overlapping time resource in which the first time resource overlaps the second time resource when the first data set is entirely received in the first sub-time resource.

According to an embodiment, the processor may further perform operation (1210) of receiving a request to perform a third audio service while performing the first audio service and the second audio service, operation (1220) of determining whether a third time resource to perform the third audio service is capable of being set so as not to overlap the first time resource and the second time resource, and operation (1230) of setting the third time resource so that at least a portion of the first time resource or at least a portion of the second time resource overlaps at least a portion of the third time resource when it is determined that the first time resource and the second time resource are not capable of being set so as not to overlap the third time resource.

According to an embodiment, a method of performing an audio service, performed by an electronic device (101; 1310; 1510; 1710), may include operation (330) of determining whether a second time resource to perform a second audio service is capable of being set so as not to overlap a first time resource that is set for a first audio service that is being performed by the electronic device, operation (360) of setting the second time resource so that at least a portion of the first time resource overlaps at least a portion of the second time resource when it is determined that the first time resource and the second time resource are not capable of being set so as not to overlap, and operation (370) of performing the second audio service based on the second time resource.

According to an embodiment, an electronic device (101; 1310; 1510; 1710) may include a communication module (190) configured to exchange data with an external device and at least one processor (120) connected to the communication module, in which the processor may perform operation (330; 1930) of determining whether a second time resource to perform a second audio service is capable of being set so as not to overlap a first time resource that is set for a first audio service that is being performed by the electronic device, operation (1950) of adjusting at least one of a first quality of the first audio service or a second quality of the second audio service when it is determined that the first time resource and the second time resource are not capable of being set so as not to overlap, operation (1960) of setting a third time resource and a fourth time resource so that the third time resource of the first audio service for the first quality does not overlap the fourth time resource of the second audio service for the second quality, and operation (1970) of performing the second audio service based on the fourth time resource.

According to an embodiment, the operation (1950) of adjusting at least one of the first quality of the first audio service or the second quality of the second audio service may include operation (2010) of adjusting a compression rate of first data of the first audio service.

According to an embodiment, the operation (1950) of adjusting at least one of the first quality of the first audio service or the second quality of the second audio service may include operation (2020) of adjusting a compression rate of second data of the second audio service.

According to an embodiment, the operation (1950) of adjusting at least one of the first quality of the first audio service or the second quality of the second audio service may include operation (2110) of adjusting at least one parameter for the first audio service.

According to an embodiment, the operation (1950) of adjusting at least one of the first quality of the first audio service or the second quality of the second audio service may include operation (2120) of adjusting at least one parameter for the second audio service.

According to an embodiment, the at least one parameter for the first audio service may include at least one of NSEs, BISs, a BN, or an IRC.

According to an embodiment, the operation (1950) of adjusting at least one of the first quality of the first audio service or the second quality of the second audio service may include operation (2210) of outputting, through a display (160), a notification message indicating that the second audio service is not capable of being performed when it is determined that the first time resource and the second time resource are not capable of being set so as not to overlap and operation (2220) of adjusting at least one of the first quality of the first audio service or the second quality of the second audio service based on a user input for the notification message.

According to an embodiment, the operation (1950) of adjusting at least one of the first quality of the first audio service or the second quality of the second audio service may include operation (2310) of determining a first priority for the first audio service and a second priority for the second audio service and operation (2320) of adjusting a quality of an audio service having a lower priority between the first audio service and the second audio service, based on the first priority and the second priority.

According to an embodiment, the operation (1950) of adjusting at least one of the first quality of the first audio service or the second quality of the second audio service may include operation of adjusting, between the first audio service and the second audio service, a quality of an audio service in which the electronic device operates in a source role.

The embodiments described herein may be implemented using a hardware component, a software component and/or a combination thereof. A processing device may be implemented using one or more general-purpose or special-purpose computers, such as, for example, a processor, a controller and an arithmetic logic unit (ALU), a DSP, a microcomputer, a field-programmable gate array (FPGA), a programmable logic unit (PLU), a microprocessor or any other device capable of responding to and executing instructions in a defined manner. The processing device may run an OS and one or more software applications that run on the OS. The processing device also may access, store, manipulate, process, and generate data in response to execution of the software. For purpose of simplicity, the description of a processing device is singular; however, one of ordinary skill in the art will appreciate that a processing device may include a plurality of processing elements and a plurality of types of processing elements. For example, the processing device may include a plurality of processors, or a single processor and a single controller. In addition, different processing configurations are possible, such as parallel processors.

The software may include a computer program, a piece of code, an instruction, or some combination thereof, to independently or collectively instruct or configure the processing device to operate as desired. Software and/or data may be embodied permanently or temporarily in any type of machine, component, physical or virtual equipment, computer storage medium or device, or in a propagated signal wave capable of providing instructions or data to or being interpreted by the processing device. The software may also be distributed over network-coupled computer systems so that the software is stored and executed in a distributed fashion. The software and data may be stored by one or more non-transitory computer-readable recording mediums.

The methods according to the embodiments described herein may be recorded in non-transitory computer-readable media including program instructions to implement various operations of the embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as CD-ROM discs and/or DVDs; magneto-optical media such as optical discs; and hardware devices that are specially configured to store and perform program instructions, such as read-only memory (ROM), RAM, flash memory, and the like. Examples of program instructions include both machine code, such as produced by a compiler, and files containing higher-level code that may be executed by the computer using an interpreter.

The above-described hardware devices may be configured to act as one or more software modules in order to perform the operations of the above-described embodiments, or vice versa.

As described above, although the embodiments have been described with reference to the limited drawings, one of ordinary skill in the art may apply various technical modifications and variations based thereon. For example, suitable results may be achieved if the described techniques are performed in a different order and/or if components in a described system, architecture, device, or circuit are combined in a different manner and/or replaced or supplemented by other components or their equivalents.

Therefore, other implementations, other embodiments, and equivalents to the claims are also in the scope of the following claims.

## Claims

1. An electronic device (101; 1310; 1510; 1710) comprising:
a communication module (190);
at least one processor (120); and
memory (130) storing instructions,
wherein the instructions, when executed by the at least one processor (120) individually or collectively, cause the electronic device (101; 1310; 1510; 1710) to:
determine whether a second time resource to perform a second audio service is capable of being set so as not to overlap a first time resource that is set for a first audio service that is being performed by the electronic device (101; 1310; 1510; 1710);
set the second time resource so that at least a portion of the first time resource overlaps at least a portion of the second time resource when it is determined that the first time resource and the second time resource are not capable of being set so as not to overlap; and
perform the second audio service based on the second time resource.

2. The electronic device (101; 1310; 1510; 1710) of claim 1, wherein the instructions, when executed by the at least one processor (120) individually or collectively, cause the electronic device (101; 1310; 1510; 1710) to:
receive a first advertising (ADV) message from a first external electronic device (102; 1320; 1520; 1720) through the communication module;
establish a first communication link with the first external electronic device based on the first ADV message;
set the first time resource for the first audio service that is performed with respect to the first external electronic device; and
perform the first audio service based on the first time resource.

3. The electronic device (101; 1310; 1510; 1710) of one of claims 1 and 2, wherein the instructions, when executed by the at least one processor (120) individually or collectively, cause the electronic device (101; 1310; 1510; 1710) to:
generate second voice data for the second audio service based on first voice data that is received through the first audio service; and
transmit an audio broadcast stream comprising the second voice data based on the second time resource.

4. The electronic device (101; 1310; 1510; 1710) of one of claims 1 to 3, wherein the instructions, when executed by the at least one processor (120) individually or collectively, cause the electronic device (101; 1310; 1510; 1710) to:
receive, from a second external electronic device (1530), a second ADV message for the second audio service through the communication module;
establish a second communication link with the second external electronic device based on the second ADV message; and
set the second time resource for the second audio service that is performed with respect to the second external electronic device based on at least one parameter for the second audio service.

5. The electronic device (101; 1310; 1510; 1710) of one of claims 1 to 4, wherein the instructions, when executed by the at least one processor (120) individually or collectively, cause the electronic device (101; 1310; 1510; 1710) to:
receive, from the first external electronic device, a request to perform the second audio service associated with a third external electronic device (1730); or
receive, from a user, the request to perform the second audio service associated with the third external electronic device.

6. The electronic device (101; 1310; 1510; 1710) of one of claims 1 to 5, wherein the instructions, when executed by the at least one processor (120) individually or collectively, cause the electronic device (101; 1310; 1510; 1710) to determine the second time resource based on at least one parameter for the second audio service.

7. The electronic device (101; 1310; 1510; 1710) of one of claims 1 to 6, wherein the at least one parameter for the second audio service comprises a connected isochronous stream (CIS) parameter or a broadcast isochronous stream (BIS) parameter.

8. The electronic device (101; 1310; 1510; 1710) of one of claims 1 to 7, wherein the instructions, when executed by the at least one processor (120) individually or collectively, cause the electronic device (101; 1310; 1510; 1710) to:
output, through a display (160), a notification message indicating that the second audio service is not capable of being performed when it is determined that the first time resource and the second time resource are not capable of being set so as not to overlap; and
set the second time resource so that the at least a portion of the first time resource overlaps the at least a portion of the second time resource based on a user input for the notification message.

9. The electronic device (101; 1310; 1510; 1710) of one of claims 1 to 8, wherein the instructions, when executed by the at least one processor (120) individually or collectively, cause the electronic device (101; 1310; 1510; 1710) to:
determine a first priority for the first audio service and a second priority for the second audio service;
determine, between the first audio service and the second audio service, a first target audio service that is performed in an overlapping time resource in which the first time resource overlaps the second time resource, based on the first priority and the second priority; and
perform the first target audio service in the overlapping time resource.

10. The electronic device (101; 1310; 1510; 1710) of one of claims 1 to 9, wherein the instructions, when executed by the at least one processor (120) individually or collectively, cause the electronic device (101; 1310; 1510; 1710) to:
determine, between the first audio service and the second audio service, whether a service quality of a second target audio service, other than the first target audio service, is less than a threshold value; and
perform the second target audio service in the overlapping time resource when the service quality of the second target audio service is less than the threshold value.

11. The electronic device (101; 1310; 1510; 1710) of one of claims 1 to 10, wherein the instructions, when executed by the at least one processor (120) individually or collectively, cause the electronic device (101; 1310; 1510; 1710) to:
determine whether a first data set of the first audio service, which is intended to be received through the first time resource, is entirely received within a first sub-time resource of the first time resource, which does not overlap the second time resource; and
perform the second target audio service in an overlapping time resource in which the first time resource overlaps the second time resource when the first data set is entirely received within the first sub-time resource.

12. The electronic device (101; 1310; 1510; 1710) of one of claims 1 to 11, wherein
the instructions, when executed by the at least one processor (120) individually or collectively, cause the electronic device (101; 1310; 1510; 1710) to:
receive a request to perform a third audio service while performing the first audio service and the second audio service;
determine whether a third time resource to perform the third audio service is capable of being set so as not to overlap the first time resource and the second time resource; and
set the third time resource so that at least a portion of the first time resource or at least a portion of the second time resource overlaps at least a portion of the third time resource when it is determined that the first time resource and the second time resource are not capable of being set so as not to overlap the third time resource.

13. A method of performing an audio service, performed by an electronic device (101; 1310; 1510; 1710), the method comprising:
determining (330) whether a second time resource to perform a second audio service is capable of being set so as not to overlap a first time resource that is set for a first audio service that is being performed by the electronic device (101; 1310; 1510; 1710);
setting (360) the second time resource so that at least a portion of the first time resource overlaps at least a portion of the second time resource when it is determined that the first time resource and the second time resource are not capable of being set so as not to overlap; and
performing (370) the second audio service based on the second time resource.

14. An electronic device (101; 1310; 1510; 1710) comprising:
a communication module (190);
at least one processor (120); and
memory (130) storing instructions,
wherein the instructions, when executed by the at least one processor (120) individually or collectively, cause the electronic device (101; 1310; 1510; 1710) to:
determine whether a second time resource to perform a second audio service is capable of being set so as not to overlap a first time resource that is set for a first audio service that is being performed by the electronic device (101; 1310; 1510; 1710);
adjust at least one of a first quality of the first audio service or a second quality of the second audio service when it is determined that the first time resource and the second time resource are not capable of being set so as not to overlap;
set a third time resource and a fourth time resource so that the third time resource of the first audio service for the first quality does not overlap the fourth time resource of the second audio service for the second quality; and
perform the second audio service based on the fourth time resource.

15. The electronic device (101; 1310; 1510; 1710) of claim 14, wherein the instructions, when executed by the at least one processor (120) individually or collectively, cause the electronic device (101; 1310; 1510; 1710) to:
adjust a compression rate of first data of the first audio service; or
adjust a compression rate of second data of the second audio service.
